**Europäisches Patentamt**

(19) **European Patent Office**

**Office européen des brevets**

(11) Publication number : **0 362 992 B1**

## EUROPEAN PATENT SPECIFICATION

(45) Date of publication of patent specification :
07.06.95 Bulletin 95/23

(51) Int. Cl.$^6$ : **G01S 13/32,** G01V 3/12, G01F 23/28

(21) Application number : 89308025.9

(22) Date of filing : 07.08.89

(54) **Distance measuring method and apparatus therefor.**

(30) Priority : 06.10.88 JP 250784/88

(43) Date of publication of application :
11.04.90 Bulletin 90/15

(45) Publication of the grant of the patent :
07.06.95 Bulletin 95/23

(84) Designated Contracting States :
AT BE DE FR GB IT SE

(56) References cited :
EP-A- 0 017 664
EP-A- 0 049 149
EP-A- 0 063 496
EP-A- 0 156 375
EP-A- 0 180 185
US-A- 4 042 925
PATENT ABSTRACTS OF JAPAN vol. 14, no. 385 (P-1094)20 August 1990 & JP-A-2 145 985 (N K K CORP) 5 June 1990
PATENT ABSTRACTS OF JAPAN vol. 10, no. 19 (P-423)24 January 1986 & JP-A-60 173 486 (NIPPON DENSHIN) 1 February 1984

(73) Proprietor : **NKK CORPORATION**
**1-2 Marunouchi 1-chome,**
**Chiyoda-ku**
**Tokyo (JP)**

(72) Inventor : **Nagamune, Akio**
**927-37 Aiharamachi**
**Machida-shi Tokyo (JP)**
Inventor : **Tezuka, Koichi**
**3-13-5 Kugayama**
**Suginami-ku**
**Tokyo (JP)**
Inventor : **Kanao, Yoshiyuki**
**6-29-9 Sasashita**
**Konan-ku**
**Yokohama-shi Kanagawa (JP)**

(74) Representative : **Wood, Anthony Charles et al**
**Urquhart-Dykes & Lord**
**91 Wimpole Street**
**London W1M 8AH (GB)**

## Description

## BACKGROUND OF THE INVENTION

### Field of the Invention

The present invention relates to a method and apparatus for measuring the distance to a target to be detected in the ground, water, snow or the like, the slag level or molten steel level in a melting reduction furnace, converter or the like and the distance to an ordinary target to be detected.

### Description of the Prior Art

Methods heretofore known or conceived for measuring the distance to a target to be detected in the ground or water in a noncontact manner by using for example an electromagnetic wave include one which transmits a monopulse of the order of several ns($10^{-9}$ seconds) as shown for example in Japanese Patent Publication No. 55-44916 or another which transmits a pseudo random signal instead of a pulse signal as shown for example in a literature "Subsurface Radar using Code Pulse" (Suzuki, et al, Institute of Electronics, Information and Communication Engineers, Technical Report SANE 87-1, 1987).

In the method of transmitting a pseudo random signal, such a pseudo random signal as M-sequence (maximal length sequence) signal or Barker code signal tending to easily produce an autocorrelation output is generated with a given PRF (pulse repetition frequency) so that after its power amplification, the generated signal is transmitted as an electromagnetic wave into the ground or water through a transmitting antenna. The reflected wave from the target to be detected is received through a receiving antenna so that after the conversion from the high-speed received signal to a low-speed received signal by a sampling device, the received output is subjected to pulse compression by a correlator and a detected signal increased in signal amplitude is generated. The time interval between the transmission of the pseudo random signal and the generation of the detected signal from the correlator is equal to the propagation time of the electromagnetic wave going back and forth the distance between the transmitting and receiving antennas and the target to be detected as in the case of the ordinary radar and therefore the distance to the target to be detected can be calculated. Generally, the electromagnetic wave is attenuated more under the ground than in the space and its phase is also changed. Thus, the frequency of the electromagnetic wave used is selected on the basis of the properties of the earth (e.g., the wet soil or dry soil), the detecting distance, etc.

Also, in "SURVEY DEVICE FOR UNDERGROUND BURIED BODY" disclosed in Patent Abstract of Japan, Vol. 10, No. 19 (Page 423), 24 Jan. '86, a transmitter is described which transmits electromagnetic coded pulses into the ground. A receiver receives signals reflected from the body buried underground and a correlator performs correlation processing and outputs a pulse compressed signal. The output signal of this correlator has an increased S/N ratio. This reference has thus disclosed a technique wherein the distance toward the underground buried body can be measured by virtue of the real time from the point when the transmitter transmits the coded pulses up to the point when the output signal of the correlator is received.

With the above-described conventional method and apparatus of the type designed to measure the time between the transmission of a pseudo random signal and the generation of a detected signal from the correlator has the disadvantage of requiring a sampling device in the apparatus thereby increasing the number of component parts, increasing the scale of the apparatus and increasing the cost. In addition, the correlator requires a tapped delay line as its component part with the resulting disadvantage of causing a measuring error by a waveform distortion caused by the passing of the received signal through the delay line.

On the other hand, a method of forming a correlator by subjecting the received signal to A-D conversion and performing a digital signal processing has not been put in practice as an economical apparatus due to the limited response speeds of circuit element and the difficulty of the real time processing.

Also, the conventional level measuring methods for the slag level, molten steel level, etc., in melting reduction furnaces, converters, etc., and position measuring methods for targets to be detected have been divided roughly into two types, i.e., contact type and non-contact type.

The contact-type methods includes an electric conduction detection type and an apparatus of this type has been devised as shown for example in Japanese Laid-Open Utility Model No. 61-129858 in which at least two electrodes are moved up and down from the top of a furnace and a voltage is applied between the electrodes thereby detecting the presence of slag by an electric conduction between the electrodes and measuring the slag level by the position of the electrodes.

Also, as a temperature distribution measuring method which is one of the contact type methods, an apparatus has been proposed in which, as shown for example in Laid-Open Patent No. 61-217516, a large number of temperature sensors are embedded at suitable intervals in the lance of a converter and the temperature distribution in the furnace is continuously measured by the temperature sensors thereby measuring the slag level on the basis of the characteristics of the temperature distribution.

The non-contact type methods include a microwave FMCW (frequency modulated continuous wave) method which has been proposed for exmaple in Japanese Laid-Open Patent No. 63-21584 or 61-57875 in which a continuous microwave having a frequency of about 10 GHz is frequency modulated and transmitted from an antenna toward a surface to be measured whereby the beat frequency resulting from the mixing of the transmitting signal and the reflected wave from the surface to be measured is counted and the level of the surface is measured. This method measures the distance from the antenna to the target to be measured on the ground that the required propagation time for the microwave to go back and forth the distance between the antenna and the target to be measured corresponds to the beat frequency.

Also, as a microwave pulse modulation type, there has been known a method in which, as in the case of the ordinary radar to detect a flying target, a microwave having a frequency of about 10 to 20 GHz is pulse modulated and transmitted to measure the distance to a target to be detected on the basis of the fact that the required wave propagation time until the reception of the reflected wave from the target to be detected is proportional to the distance to the target.

In addition, as shown for example in a literature "An Experimental Study of a Pulse Compression Radar Using Random Series" (Nishimoto, et al, The Institute of Electronics, Information and Communication Engineers, Technical Report SANE 85-25, September 1985), a measuring method employing a radar has been known in which a carrier wave having a frequency of 1 to several tens GHz is modulated by a pseudo random signal, e.g., a maximal length sequence signal and transmitted to a target to receive the reflected wave from the target, and an optimal matched filter combining a tapped delay line and a weighted adder is used in a demodulation system to effect a pulse compression and thereby to improve the resolution and sensitivity.

With the conventional level measuring methods above-mentioned or the distance measuring methods to a target, if the methods are of the contact type, they all tend to deteriorate the durability of the portions which contact with the slag or molten steel in a furnace or tend to cause damages to those portions. In the case of the electric detection type of conduction, there are disadvantages that an erroneous signal is generated due to an insulation failure of the electric insulating portion caused by the dust or the molten steel splash in a furnace, that a continuous measurement cannot be effected due to the detection by the vertical movement of the electrodes and so on.

Also, in the case of the temperature distribution measuring method of the contact type, the embedding of the temperature sensors in the lance cooled with water deteriorates the response of the temperature sensors due to the heat-transfer characteristic of the lance. There is another disadvantage that when increasing the number of temperature sensors for the purpose of improving the measuring accuracy, there are many restrictions to the wiring of the sensors from the spatial and temperature point of view.

In the case of the microwave FMCW method of the non-contact type, since the inside space of the furnace is limited and the wave reflectors such as the lance and the charging hole of the furnace are present within the space, when a microwave is transmitted into the furnace, undesired reflected waves including multipath reflected waves are generated with the resulting disadvantage of making it difficult to eliminate the undesired reflected signals and thereby to accurately measure only the reflected signal from the intended target to be detected.

Also, in the case of the microwave pulse modulation method of the non-contact type, there are disadvantages that since usually the signal reception is effected after the transmission of the pulse modulated wave has been completed, considering the propagation velocity of the microwave, it is necessary for a short distance measuring radar to transmit a microwave having a relatively large peak transmission power and modulated by a pulse of a very short time width and to measure a small time required until the reception of a received signal reflected from a short distance target and it is difficult to technically realize these operations thus making the method unsuitable for the purpose of short distance measurements such as the level measurement in a furnace and so on.

Further, in the case of the microwave pulse compression radar method of the non-contact type, there are disadvantages that while, after the receiving of the signal, the pulse width is compressed to increase the received power and thereby to improve the resolution and sensitivity, the construction of the optimal matched filter combining the tapped delay line and the weighted adder required in the demodulation system is complicated, and particularly if a pseudow random signal length is increased (e.g., $2^5$ to $2^{20}$) so as to enhance the sensitivity, the apparatus is complicated in construction and increased in size thereby increasing the cost. There is another disadvantage of requiring complicated operations such as the adjustments of the delay times among the taps and the adjustment for the correction of a waveform distortion during the propagation in the delay line. Still another disadvantage is that where the function of the matched filter is performed by a digital signal processing, a high-speed A-D converter and a high-speed computing unit are required thereby similary complicating the construction of the apparatus, increasing its size and increasing the cost.

## SUMMARY OF THE INVENTION

It is an object of the present invention to provide a distance measuring method and apparatus which overcome the foregoing deficiencies of the conventional methods and apparatus for measuring the distance to a target to be detected in the ground or water and also capable of detecting the distance to such target to be detected with a simple construction.

It is another object of the invention to provide a distance measuring method and apparatus which overcome the foregoing deficiencies of the conventional methods and apparatus for measuring the slag level or molten steel level in a melting reduction furnace, converter or the like and also capable of accurately measuring a level position such as the slag level or molten steel level or the distance to a target to be detected from a short distance continuously in a non-contact manner by the use of an inexpensive apparatus without being affected by any measuring environment involving the presence of dust, etc.

To accomplish the first object, in accordance with the invention there is thus provided a distance measuring method comprising generating first and second pseudo random signals which are the same in pattern but slightly different only in frequency, branching the pseudo random signal in two parts such that its one part is transmitted toward a target to be detected and the other part is multiplied by the second pseudo random signal to calculate a product value (first product value), calculating a product value (second product value) of the received signal obtained by receiving the reflected signal from the target and the second pseudo random signal, and measuring the time difference between the time sequence pattern of the low-pass filtered first product value and the time sequence pattern of the low-pass filtered second product value, thereby measuring the distance to the target.

To accomplish the first object, in accordance with the invention there is provided a distance measuring apparatus comprising first and second pseudo random signal generating means for generating first and second pseudo random signals which are the same in pattern but slightly different only in frequency, transmitting means for transmitting the output of the first pseudo random signal generating means as a transmitted signal to a target to be detected, receiving means for receiving a reflected signal from the target to obtain a received signal, a first multiplier for multiplying the outputs of the first and second pseudo random signal generating means, a second multiplier for multiplying the output of the receiving means and the output of the second pseudo random signal generating means, and means for measuring the time difference between the time sequence patterns of the low-pass filtered outputs from the first and second multipliers.

To accomplish the second object, in accordance with the invention there is provided a distance measuring method comprising generating a first pseudo random signal and a second pseudo random signal which is the same in pattern but slightly different in frequency from the first pseudo random signal, multiplying the first and second pseudo random signals to generate a time sequence pattern of a product value, modulating a carrier wave by the first pseudo random signal and transmitting the modulated carrier wave toward a target to be detected, multiplying a received signal consisting of a received reflected signal from the target and the second pseudo random signal, detecting the correlative modulated carrier wave to generate a time sequence pattern of the detected signal, and measuring the time difference between the low-pass filtered product time sequence pattern and the low-pass filtered detected signal time sequence pattern thereby measuring the distance to the target.

To accomplish the second object, in accordance with the invention there is provided a distance measuring apparatus comprising first pseudo random signal generating means, second pseudo random signal generating means for generating an output signal which is the same in pattern but slightly different in frequency from the output signal of the first pseudo random signal generating means, a first multiplier for multiplying the output of the first pseudo random signal generating means and the output of the second pseudo random signal generating means, carrier wave generating means, transmitting means for transmitting a signal obtained by modulating the output signal of the carrier wave generating means by the output of the first pseudo random signal generating means as a transmitted signal to a target to be detected, receiving means for receiving a reflected signal from the target to obtain a received signal, a second multiplier for multiplying the output of the receiving means and the output of the second pseudo random signal generating means, detecting means for detecting the carrier wave generated from the second multiplier, and means for measuring the time difference between the time sequence pattern of the low-pass filtered detected signal generated from the detecting means and the time sequence pattern of the low-pass filtered product value generated from the first multiplier.

In accordance with either of the first and second aspects of the invention, by virtue of the fact that the measured time between a detected signal from a target to be detected and a reference signal is greatly expanded on a time base by the use of a method so designed that a first pseudo random signal is directly transmitted to a target to be detected or a carrier wave phase modulated by the first pseudo random signal is transmitted to the target to be detected and a received signal reflected from the target is subjected to a correlation processing by a second pseudo random signal which is the same in pattern and close in frequency to the first pseudo random signal, the measurement of time is made possible directly by use of a low-speed signal. As a result, the need for the sampling device required in the conventional real time high-speed signal processing is eliminated and the apparatus can be constructed with low-speed circuit elements with the resulting effect of reducing the size and cost of the apparatus.

Also, in the measurement of time proportional to the distance to be measured, the measurement is made in terms of a time greatly expanded as compared with the real time so that not only the distance to a target can be measured accurately at a short distance, but also the desired reflected signal from the intended target and the undesired signals from outside the objective range can be clearly discriminated and separated from each other on the time base for the generation of detected signal. Thus, when measuring the level within a furnace, even in such measuring environment as the limited space in the furnace where undesired reflected waves tend to be caused, there is the effect of eliminating the undesired reflected waves and stably measuring the level.

## BRIEF DESCRIPTION OF THE DRAWINGS

Fig. 1 is a block diagram of a conventional underwater or under-ground searching radar system which transmits a pseudo random signal.

Fig. 2 is a block diagram of the correlator of Fig. 1.

Fig. 3 is a block diagram showing a first embodiment of the invention.

Fig. 4 is a diagram showing the construction of the 7-bit maximal length sequence signal generator of Fig. 3.

Fig. 5 is an output waveform diagram of the maximal length sequence signal generator.

Fig. 6 shows a plurality of signal wave forms useful for explaining the operation of the embodiment of Fig. 3.

Fig. 7 is a block diagram showing an embodiment of the clock generator.

Fig. 8 is a block diagram of the image display system used with the first embodiment.

Fig. 9 is an image display diagram of a detected signal according to the first embodiment.

Fig. 10 is a block diagram showing a second embodiment of the invention.

Fig. 11 shows a plurality of signal waveforms useful for explaining the operation of the second embodiment.

Fig. 12 is a diagram showing the second embodiment incorporated in an apparatus for measuring the slag level within a melting reduction furnace.

## DETAILED DESCRIPTION OF THE PREFERRED EMBODIMENTS

While the present invention and the conventional techniques have a common feature with respect to the use of pseudo random signal, the conventional techniques are methods of utilizing a single pseudo random signal to measure the real propagation time of an electromagnetic wave. On the contrary, the present invention is directed to a method so designed that using two pseudo random signals which are the same in pattern but slightly different in frequency from each other, the corellation output between the two signals before the transmission and after the reception is detected thereby considerably expanding the measured time as compared with the real time. Therefore, the conventional technique will be explained first with a view to clarifying the differences between the present invention and the conventional techniques.

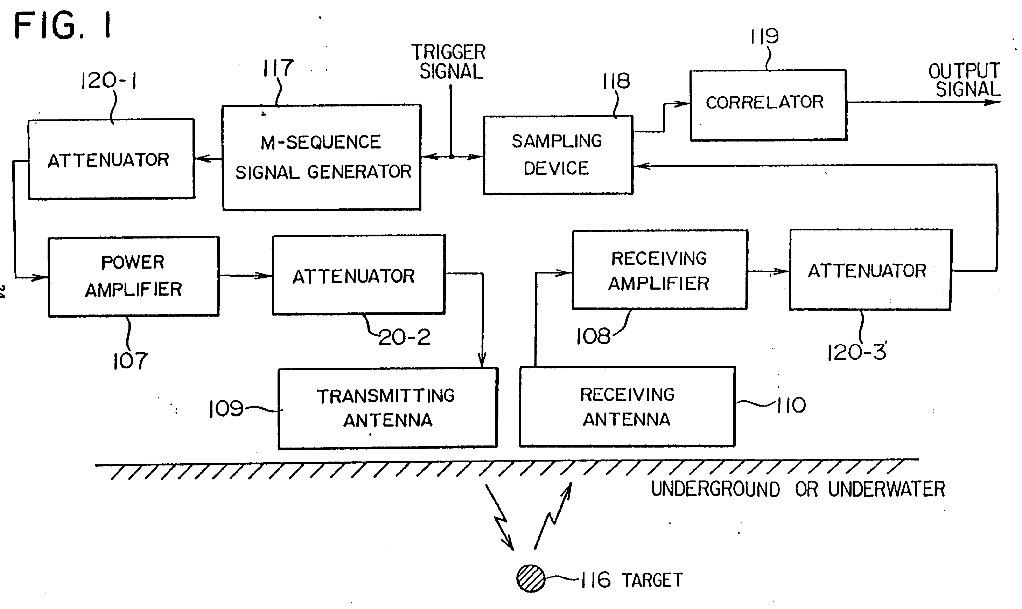

Referring to Fig. 1, there is illustrated a block diagram of a conventional underground or underwater searching radar system which transmits a pseudo random signal. In the Figure, numeral 107 designates a power amplifier, 108 a receiving amplifier, 109 a transmitting antenna, 110 a receiving antenna, 116 a target in the ground or in the water, 117 a maximal length sequence signal generator, 118 a sampling device, 119 a correlator, and 120-1, 120-2 and 120-3 attenuators.

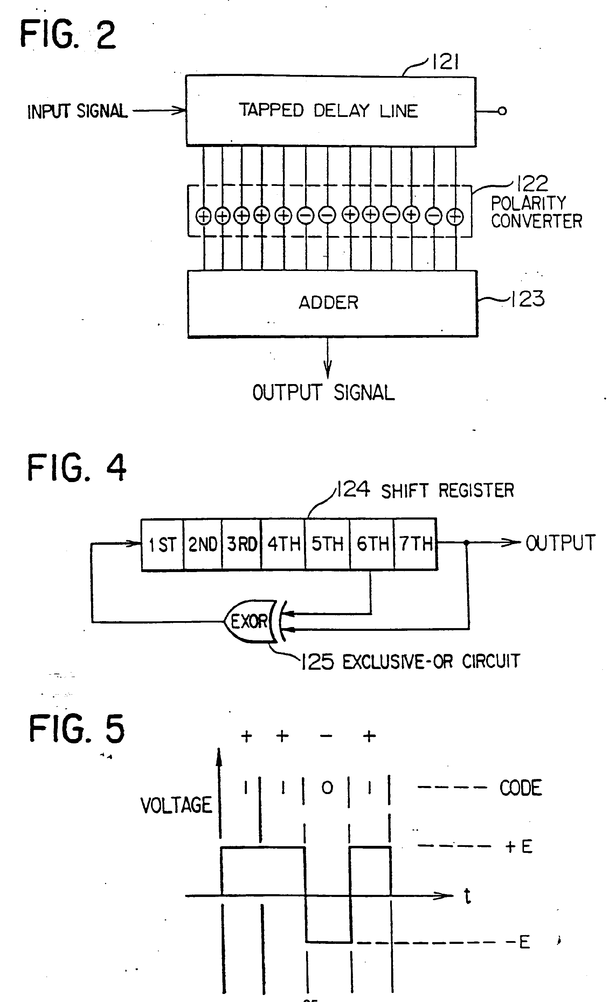

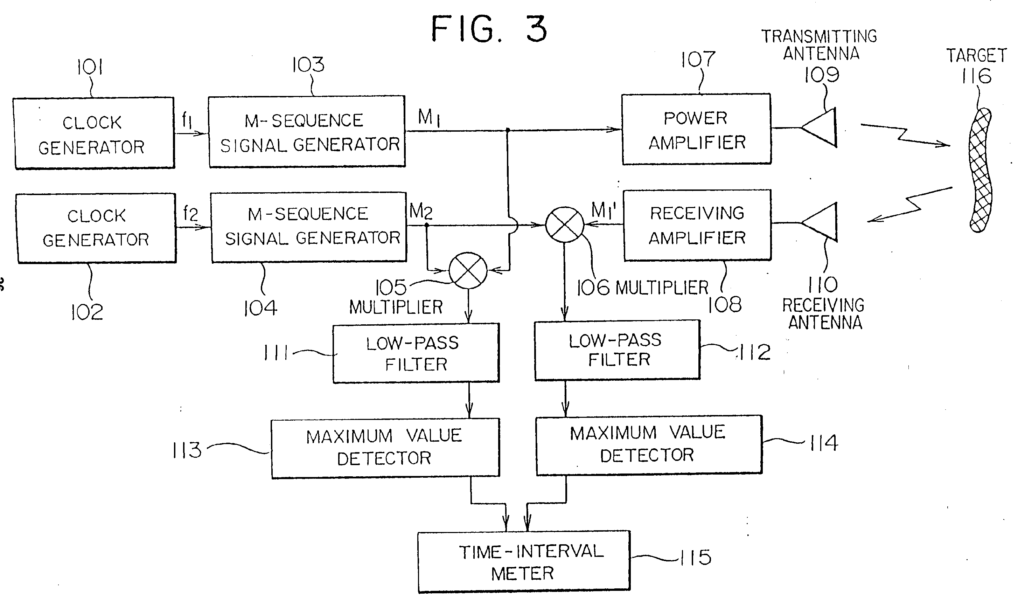

Fig. 2 is a block diagram of the correlator, and in the Figure numeral 121 designates a tapped delay line, 122 a polarity converter, and 123 an adder.

The operation of the apparatus shown in Figs. 1 and 2 will now be described. Firstly, a trigger signal is applied at a given repetition frequency to the maximal length sequence signal generator 117. The maximal length sequence signal generator 117 is used as one of pseudo random signal generating means and its code has a given periodicity. Each time a trigger signal is applied, the maximal length sequence signal generator 117 generates a maximal length sequence signal for one period. The output signal of the maximal length sequence signal generator 117 is radiated as an electromagnetic wave into the ground or water from the transmitting antenna 109 through the attenuator 120-1, the power amplifier 107 and the attenuator 120-2. The radiated electromagnetic wave is reflected from the target 116 to be detected in the ground or water. The output signal from the receiving antenna 110 is applied to the sampling device 118 through the receiving amplifier 108 and the attenuator 120-3. The sampling device 118 has a function of converting a high-speed signal to a lows-peed signal. Assuming N received signals of the same waveform are obtained in response to N trigger signals, this received signal is divided in time by N into signals $x_1$, $x_2$, .... $x_N$. Thus, only the signal $x_1$ is sampled from the first received signal and only the signal $x_2$ is sampled from the second received signal. Such sampling operation is repeated so that a single received signal $x_1$, $x_2$, ... $x_n$ is reproduced from N received signals. In this way, the sampling device 118 converts a high-speed received signal to a low-speed received signal and its output is supplied to the correlator 119. The correlator 119 has a function of determining a correlation between the input signal and the preliminarily stored maximal length sequence signal and Fig. 2 shows its detailed block diagram. The input signal is introduced into the tapped delay line 121 and each signal corresponding to its delay time is outputted from each of the taps. The output signals from the taps of the tapped delay line 121 are applied to the polarity converter 122. In the polarity converter 122, the mark "+" indicates that no polarity conversion is effected and "-" indicates that a polarity conversion is effected. The output signals are applied parallely to the adder 123 which in turn adds the parallel input signals to obtain the summation. As a result, the received signal is compressed in time but increased in amplitude and it is then generated from the correlator 119. In this technique, the use of a pseudo random signal has the purpose of subjecting the received signal to pulse compression and the measurement of distance is made in terms of the propagation time required for the electromagnetic wave to go back and forth the distance between the transmitting and receiving antennas and the target to be detected as the same as in the case of the ordinary radar.

Next, the present invention will be described. A distance measuring method according to the invention is a method comprising setting a first pseudo random signal used for transmission and reception from a target to be detected and a second pseudo random signal which is used as a reference signal and is the same in pattern but slightly different in frequency from the first pseudo random signal, detecting the time of detection of the maximum correlation value between the reference second pseudo random signal and the transmitted first pseudo random signal and the time of detection of the maximum correlation value between the second pseudo random signal and the received first pseudo random signal and measuring the interval of time between both of the maximum correlation value detection times, thereby measuring the time proportional to the distance to the target to be detected. This measured time is in the form of a greatly expanded time as compared with the real time required for the propagation of the electromagnetic wave in the conventional method, thereby making possible the measurement of time directly by means of a low-speed signal.

A distance measuring apparatus according to the first embodiment of the invention employs the above-mentioned measuring method so that the sampling device heretofore required for high-speed signal processing purposes is no longer necessary and the apparatus is composed low-speed circuit elements. In addition, there is no need for the tapped delay line which causes a measuring error due to a wave-form distortion.

Also, the apparatus according to the first embodiment includes, for the purpose of detecting the maximum correlation values between the pseudo random signals, a pair of multipliers for detecting correlation values, means for generating pulse when the output of each of the pair of multipliers attains a maximum value, and means for measuring the time interval between the generated two pulses, thereby making it possible to make very accurate time measurement.

In this embodiment, each of the two pseudo signal generating means is composed of a clock synchronization-type pseudo random generator and the two are identical in construction excepting that their driving clock signal frequencies are slightly different from each other. Therefore, the two pseudo random signal generating means can be realized by means by common circuits.

The operation of the first embodiment can be formulated as follows.

Assume that $f_1$ represents the clock frequency of the first pseudo random signal and $f_2$ represents the clock frequency of the second pseudo random signal and that the pattern of these pseudo random signals are the same. Here, it is assumed that $f_1 > f_2$.

If $T_B$ represents the period at which a reference signal produced by determining a correlation between the transmitted first pseudo random signal and the second pseudo random signal attains its maximum value, the difference between the wave numbers of the first and second pseudo random signals which are contained in the period $T_B$ just corresponds to the wave number N of one period.

In other words, $T_B \cdot f_1 = T_B \cdot f_2 + N$

By simplifying the above equation, the period $T_B$ is given by the following equation (1)

$$T_B = N/(f_1 - f_2) \quad (1)$$

In other words, the period $T_B$ at which the reference signal attains the maximum value is increased with a decrease in the difference between the two clock frequencies.

Then, if $T_D$ represents the time difference between the time that the detected signal produced by determining the correlation between the signal resulting from the first pseudo random signal transmitted, reflected from a target to be detected and received again after the expiration of a propagation time $\tau$ and the second pseudo random signal and the time that the reference signal attains the maximum value, the wave number of the second pseudo random signal generated during the time difference $T_D$ is smaller than the wave number of the first pseudo random signal generated during $T_D$ by the wave number of the first pseudo random signal generated during the time $\tau$ and therefore the following equation holds

$$T_D \cdot f_2 = T_D \cdot f_1 - \tau \cdot f_1$$

Simplifying the above equation, the time difference $T_D$ is given by the following equation (2)

$$T_D = \tau \cdot f_1/( f_1 - f_2) \quad (2)$$

In other words, the propagation time $\tau$ is expanded in time by $f_1/(f_1 - f_2)$ times or it is measured in terms of the low-speed $T_D$. Due to this expansion of the measured time, the distance measuring method and apparatus according to the invention can be considered essentially suited for short distance measuring purposes.

If v represents the propagation velocity and x represents the distance to a target to be detected, the propagation time $\tau$ is given by the following:

$$\tau = 2x/v$$

and therefore the following equation (3) is obtained form equation (2)

$$x = \frac{f_1 - f_2}{2f_1} \cdot v.T_D \quad (3)$$

By measuring the time difference $T_D$, it is possible to measure the distance x from equation (3).

Referring now to the block diagram of Fig. 3 showing the first embodiment of the invention, numerals 101 and 102 designate clock generators, 103 and 104 maximal length sequence signal generators, 105 and 106 multipliers, 107 a power amplifier, 108 a receiving amplifier, 109 a transmitting antenna, 110 a receiving antenna, 111 and 112 low-pass filters, 113 and 114 maximum value detectors, 115 a time-interval meter, and 116 a target to be detected.

Also, first pseudo random signal generating means is formed by the clock generator 101 and the maximal length sequence signal generator 103.

Second psudo random signal generating means is formed by the clock generator 102 and the maximal length sequence signal generator 104.

The power amplifier 107 and the transmitting antenna 109 form means for transmitting the output of the first pseudo random signal generating means to the target 116.

The receiving antenna 110 and the receiving amplifier 108 form means for receiving the reflected signal from the target 116 to obtain the received signal.

Time difference measuring means is formed by the low-pass filters 111 and 112, the maximum value detectors 113 and 114 and the time-interval meter 115.

Referring to Fig. 4 showing the construction of a 7-bit maximal length sequence signal generator, numeral 124 designate a shift register of a 7-stage configuration, and 125 an exclusive-OR circuit.

Fig. 5 is an output waveform diagram of the maximal length sequence signal generator.

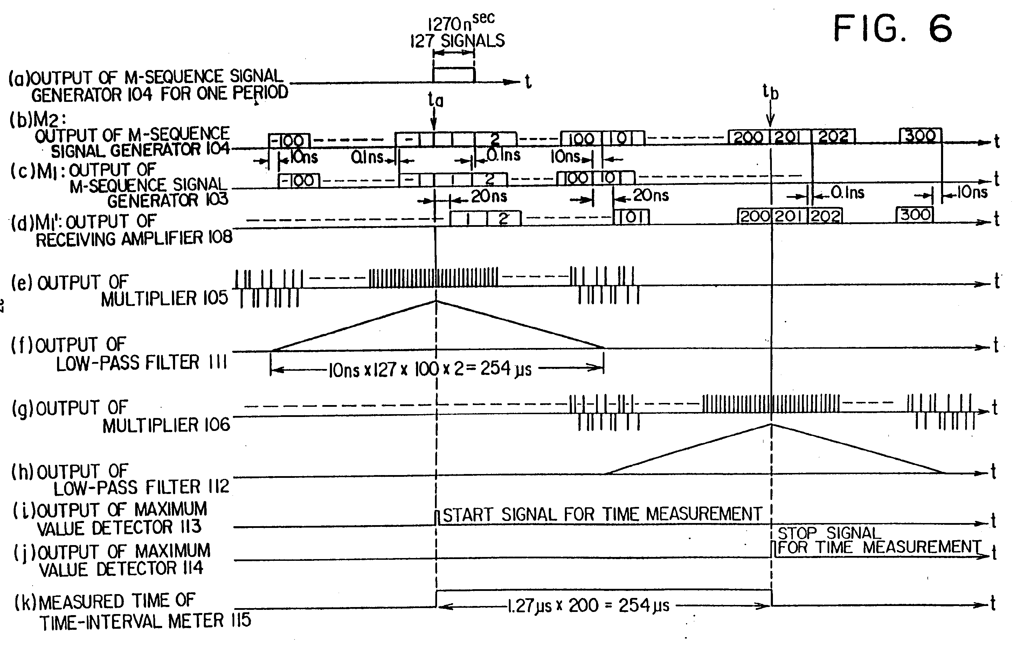

Fig. 6 shows a plurality of waveforms useful for explaining the operation of the embodiment of Fig. 3.

The operation of the embodiment will now be described with reference to Figs. 4 to 6. The clock generator 101 generates a clock signal of a frequency $f_1$ and the clock generator 102 generates a clock signal of a frequency $f_2$. One feature of this invention resides in that the frequency $f_1$ of the first clock signal and the frequency $f_2$ of the second clock signal are very close to each other and the frequency difference is very small. A description will now be made of a case in which $f_1$ = 100.004 MHz, $f_2$ = 99.996 MHz and the difference $f_1 - f_2$ = 8 KHz. The clock signals of the frequency $f_1$ generated from the clock generator 101 are applied as the synchronizing signals to generate the maximal length sequence signal to the maximal length sequence signal generator 103, and the clock signals of the frequency $f_2$ generated from the clock generator 102 are similarly applied to the maximal length sequence signal generator 104. The maximal length sequence signal generators 103 and 104 are used as one form of the pseudo random signal generating means and Baker code generators may for example be used in place of the maximal sequence length signal generators. In the case of this embodiment, a 7-bit maximal length sequence code is used and its structure is shown in Fig. 4.

In other words, the shift register 124 composed of 7-stage flip-flops synchronized with clock signals is provided so that the output signals of the sixth-stage and seventh-stage flip-flops are applied to the first-stage flip-flop through the exclusive-OR circuit 125 and the clock signals which are not shown are supplied to the respective flip-flop stages, thereby generating an output signal from the seventh-stage flip-flop to generate a maximal length sequence code synchronized with the clock signals. The thus generated maximal length sequence code is a periodic recurrent code composed of a combination of signs "1" and "0" or "+" and (-), and in this embodiment the signs "1" and "0" respectively generate positive-voltage (+E) and negative-voltage (-E) signals as shown in Fig. 5. As regards the period of the maximal length sequence signal which is generated recurrently, since the signal comprises 7 bits, one period is completed upon the generation of $N = 2^7-1 = 127$ signals. Then, the same signals as the preceding period are generated starting at the next or 128th signal and this period is caused to recur repeatedly. Generally, while the maximal length sequence signal is a random signal when considered partially, it is used as a signal utilizing the autocorrelation function and the signal is used in a pulse compression radar in the description of the conventional apparatus.

The maximal length sequence signal generators 103 and 104 are composed of the identical circuits for generating the same 7-bit maximal length sequence signals and the only difference is that the frequencies $f_1$ and $f_2$ of the inputted clock signals are slightly different from each other. In addition, a shift register having a clock frequency of about 100 MHz can for example be realized easily with ECL (emitter coupled logic) elements. Each of the maximal length sequence signal generators 103 and 104 recurrently outputs a maximal length sequence signal $M_1$ or $M_2$

composed of 127 voltages +E and -E for each period. However, since the frequencies of the input clock signals differ slightly from each other, the length of one period differs slightly between the maximal length sequence signals $M_1$ and $M_2$. The periods of the maximal length sequence signals $M_1$ and $M_2$ can be determined as follows: the period of $M_1$ = 127 x 1/100.004 MHz $\doteq$ 1269.9492 ns and the period of $M_2$ = 127 x 1/99.996 MHz $\doteq$ 1270.0508 ns. In other words, while the periods of the maximal length sequence signals $M_1$ and $M_2$ are about 1270 ns ($10^{-9}$ seconds), there is the time difference of about 0.1 ns between the both periods. Thus, if the maximal length sequence signals $M_1$ and $M_2$ are recurrently generated so that the patterns of the two signals $M_1$ and $M_2$ coincide at a certain time $t_a$, a deviation of 0.1 ns is caused between the two signals after the expiration of the time of one period and a deviation of 10 ns is caused between the two signals after the expiration of 100 periods. Since the maximal length sequence signal generates 127 signals for one period of 1270 ns and thus the duration time of one signal is 10 ns. Thus, the occurrence of a deviation of 10 ns between the maximal length sequence signals $M_1$ and $M_2$ means the occurrence of a deviation corresponding to one maximal length sequence signal. These timings are shown in Fig. 6. More specifically, in Fig. 6, (a)shows that the output of the reference maximal length sequence signal generator 104 for one period includes 127 signals and its period is 1270 ns, and (b) shows the output $M_2$ of the maximal length sequence signal generator 104 is recurrently generated from -100th to 300th periods. Also, (c) shows that the output $M_1$ from the maximal length sequence signal generator 103 is short by 0.1 ns for one period and 10 ns for 100 periods as compared with the output $M_2$ from the maximal length sequence signal generator 104 and that at the time ta when the maximal length sequence signals $M_1$ and $M_2$ come into synchronization thus causing the patterns of the two signals to coincide. Also, after the patterns of the maximal length sequence signals $M_1$ and $M_2$ have coincided at the time ta, the deviation is again increased gradually so that the patterns of the two signals coincide again at the expiration of a given time $T_B$. When the maximal length sequence signals $M_1$ and $M_2$ come into synchronism so that the patterns of the two signals coincide, the correlation output of the two signals becomes maximum and the calculation of this correlation is performed by the multiplier 105 which will be described later. Also, in the case of this embodiment, the period $T_B$ during which the maximum correlation output is obtained can be computed as $T_B$ = 15.875 ms by substituting the wave number N = 127 for one period of the maximal length sequence signals, the frequency $f_1$ = 100.004 MHz and $f_2$ = 99.996 MHz into the previously mentioned equation (1).

The maximal length sequence signals $M_1$ and $M_2$ respectively generated from the maximal length sequence signal generators 103 and 104 are each branched in two so that one signal is applied to the multiplier 105. The multipliers 105 and 106 are each composed for example of a wide-band double balanced mixer (DBM) and the multiplication for determining the correlation output of the two maximal length sequence signals is performed. The maximal length sequence signal comprises positive or negative voltage signals as mentioned previously so that the multiplication result of the same signs results in a positive voltage and the multiplication result of the different signs results in a negative voltage, thereby generating positive or negative voltage signals at the output of the multipliers 105 and 106, respectively. Thus, the output signal of the multiplier 105 consists of a dc positive voltage or a pulse of positive voltage at around the time ta at which the patterns of the maximal length sequence signals $M_1$ and $M_2$ coincide. However, the periods of the maximal length sequence signals $M_1$ and $M_2$ differ slightly so that a deviation of 0.1 ns occurs between the two signals each time the time of one period expires. Thus, at the expiration of 100 periods from the time ta, there is a deviation of 10 ns or a deviation corresponding to one signal interval between the maximal length sequence signals $M_1$ and $M_2$. In this condition, there is no longer any correlation between the signals and a train of positive and negative pulse signals are randomly generated at the output of the multiplier 105. This output waveform of the multiplier 105 is shown in (e) of Fig. 6. The output signal of the multiplier 105 is supplied to the low-pass filter 111 which in turn converts the signal to a DC voltage. Each of the low-pass filters 111 and 112 has a cutoff frequency fc and it serves the function of attenuating the input components which are higher frequency components than the cutoff frequency fc and smoothing the input signal. The output signal of the low-pass filter 111 attains the maximum value at the time ta at which the patterns of the maximal length sequence signals $M_1$ and $M_2$ coincide and it attains the minimum value at time at which the maximal length sequence signal $M_2$ is shifted from the time ta by about 100 periods, that is, at times of ta ± 127 μs. Then, the output signal of the low-pass filter 111 takes the form of a triangular voltage signal which lenearly decreases from the maximum value or the apex to the minimum value on the both sides. This output waveform of the low-pass filter 111 is shown in (f) of Fig. 6. Also, as mentioned previously, this triangular voltage signal is generated at the period $T_B$ = 15.875 ms at which period the two maximal length sequence signals come into synchronization. The output signal from the low-pass filter 111 is applied to the maximum value detector 113. Each of the maximum value detectors 113 and 114 has a function of detecting the maximum value of the triangular voltage signal applied from the low-pass filter 113 or 114 or the voltage at the apex of the triangle and generating a single pulse signal at the time of detection of the maximum voltage value. The method of detecting the time of generation of the maximum voltage may for example be one comprising providing an A/D converter and a digital data comparator, successively converting an input triangular analog signal by high-speed sampling signals, comparing at all times the digital data obtained by the preceding sampling signal and the digital data obtained by the current sampling signal as to relative magnitude by the digital data comparator and detecting the time of change of the input signal from the increase to the decrease with respect to time. The same function can be realized by successively comparing the similarly sampled analog signals. It is to be noted that where there is the danger of small peaks appearing due to noise or the like, it is suffice to establish a threshold value so that the detection of peak value is performed only on those signals exceeding the threshold value. The maximum value detector 113 supplies a pulse output as a start signal for time measurement to the time-interval meter 115 at the maximum value detecting time ta of the input signal. When the start signal for time measurement or a reference time is applied from the maximum value detector 113, the time-interval meter 115 starts the measurement of time. This condition is shown in (i) and (k) of Fig. 6. Of the maximal length sequence signal $M_1$ generated from the maximal length sequence signal generator 103 and the branched off in two, the other maximal length sequence signal $M_1$ is applied to the power amplifier 107 so that the output power is amplified for example to about 20 mW. The maximal length sequence output signal from the power amplifier 107 is supplied to the transmitting antenna 109. The transmitting antenna 109 radiates the electromagnetic wave of the maximal length sequence signal into a propagation medium. The radiated electromagnetic wave is reflected by the target 116 whose conductivity or dielectric constant is different from the value of the propagation medium and it is then detected by the receiving antenna 110. The reflected signal thus detected by the receiving antenna 110 is applied to the receiving amplifier 108 so that the amplification and waveform reshaping of the signal are performed. The output signal $M_1'$ of the receiving amplifier 108 is the same as the signal delayed by the propagation time of the maximal length sequence signal $M_1$ radiated as an electromagnetic wave from the transmitting antenna 109, going back and forth the distance to the target 116 and then reaching the receiving antenna 110.

Strictly speaking, while fixed delay times are involved in the power amplifier 107, the signal amplifier 108, etc., these fixed delay times can be eliminated from the measurement point of view by for example the method of eliminating these fixed delay times at the stage of the processing for measurement or the method of supplying the output signal $M_1$ from the maximal length sequence signal generator 103 through a delay circuit having the equal delay time. In this way, the maximal length sequence signal $M_1'$ having the delay time proportional to the distance from the transmitting and receiving antennas 109 and 110 to the target 116, is generated from the receiving amplifier 108 and supplied to one input of the multiplier 106. Assume that the target 116 is present in the air at a distance of 3 meters from the transmitting and receiving antenna 109 and 110, respectively. Since the electromagnetic wave required 20 ns to propagate in the air and go back and forth the distance of 3 meters, the maximal length sequence signal $M_1'$ generated from the receiving amplifier 108 is delayed by 20 ns from the maximal length sequence signal $M_1$ generated from the maximal length sequence signal generator 103. This condition is shown in (d) of Fig. 6. Also, of the maximal length sequence signal $M_2$ generated from the maximal length sequence signal generator 104 and branched off in two, the other maximal length sequence signal $M_2$ is supplied to the another input of the multiplier 106. In the like manner as the multiplier 105, the multiplication of the maximal length sequence signals $M_1'$ and $M_2$ is performed. The multiplier 106 supplies the multiplication result of the maximal length sequence signals $M_1'$ and $M_2$ to the low-pass filter 112. The low-pass filter 112 generates a triangular voltage signal whose apex corresponds to the time at which the patterns of the two signals $M_1'$ and $M_1$ coincide and this voltage signal is supplied to the maximum value detector 114. The foregoing operation is identical with the operation described in connection with the multiplier 105 and the low-pass filter 111. The only difference is the time instant at which the patterns of the maximal length sequence signals $M_1'$ and $M_2$ coincide. Since the maximal length sequence signal $M_1'$ is delayed by 20 ns from the maximal length sequence signal $M_1$ and since the period of the maximal length sequence signal $M_1'$ is shorter by the patterns of the two signals $M_1'$ and $M_1$ coincide at a time tb which is delayed from the time ta by 200 periods of the maximal length sequence signal $M_2$. Since one period of the maximal length sequence signal $M_2$ is 1/27 μs. 200 periods amounts to 1.27 μs x 200 = 254 μs and the time tb is present at a time lagging the time ta by 254 μs. The maximum value detector 114 generates a pulse output when detecting the maximum value of the applied triangular voltage and of course this pulse output is generated at the time tb. The operation of the maximum value detector 114 is the same as the previously mentioned maximum value detector 113 and at this time the generated pulse output is supplied as a stop signal for time measurment to the time-interval meter 115. The time-interval meter 115 measures the time interval between the time ta at which the start signal for time measurement is applied and the time tb at which the stop signal for time measurement is applied. In this emboidment, the previously mentioned 254 μs is obtained as the result of the measurement. The time measuring method may for example be an ordinary method of providing a time gate from the measurement starting time to the stop time and counting the number of clock signals during the time gate. The time measured by the time interval meter 115 is proportional to the distance from the transmitting and receiving antennas of the present apparatus to the target. In other words, the previously mentioned 254 μs corresponds to the distance of 3 meters and 2540 μs corresponds to the distance of 30 meters. Thus, by measuring such time, it is possible to measure the distance to a target to be detected. In addition, the present invention greatly differs from the ordinary radar system in that the time proportional to the distance is considerably expanded. In other words, to measure the distance of 3 meters by the ordinary radar is to measure the time of 20 ns (20 x 10$^{-9}$ seconds). In accordance with the invention, however, to measure the distance of 3 meters is to measure 254 μs (254 x 10$^{-6}$ seconds). The expansion ratio of the measured time is computed by substituting the frequency $f_1 = 100.004$ MHz and $f_2 = 99.996$ MHz into the previously mentioned equation (2) thereby obtaining the following equation (4)

$$T_D = 12,500 \cdot \tau \quad (4)$$

In other words, the time is expanded by 12,500 times on the time base and it is only necessary to measure a very low speed signal. Therefore, the radar system according to the invention has great features in that the accuracy of short distance measurement is improved and the apparatus can be easily constructed with inexpensive low-speed element. The time measurement by the time-interval meter 115 is performed in response to the application of each time measurement start signal of the previously mentioned period of 15.875 ms. Thus, where the target is moved, a change in the distance from the transmitting and receiving antennas to the target can be detected at intervals of 15.875 ms. Also, with the time measurement according to the embodiment, 15.875 ms corresponds to the distance of about 188 meters. While the maximum detecting distance of 188 meters is sufficient in such applications as the ordinary underground search, by suitably selecting the clock frequencies $f_1$ and $f_2$, it is possible to change the expansion ratio on the time base and the maximum detecting distance.

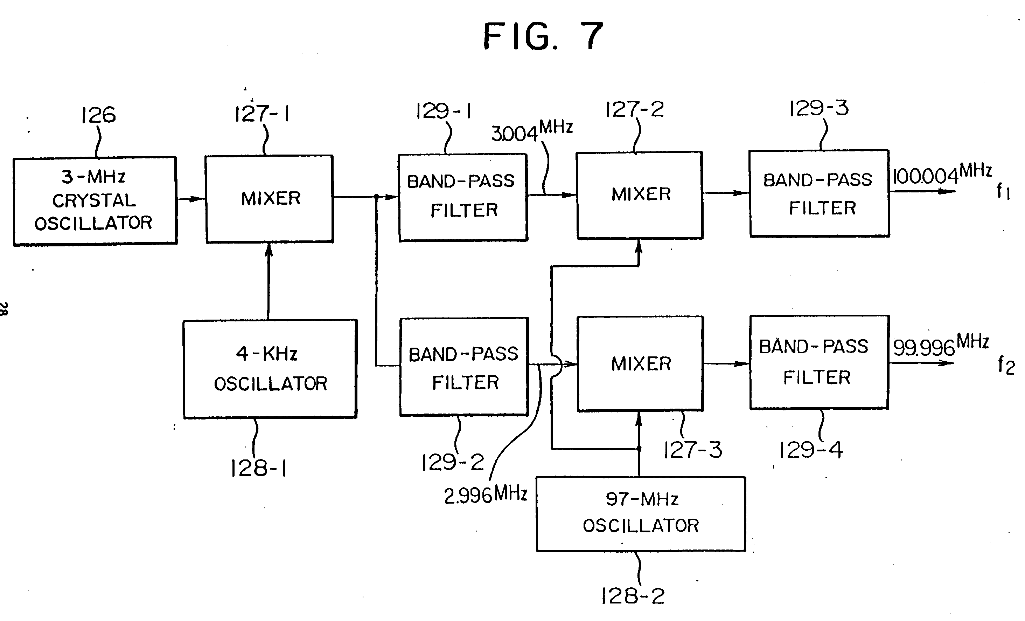

Referring now to Fig. 7, there is illustrated a block diagram for an embodiment of the clock generator. In the Figure, numeral 126 designates a crystal oscillator having a frequency of 3 MHz, 127-1, 127-2 and 127-3 mixers each adapted to mix two signals of frequencies $f_A$ and $F_B$ to generate a signal of a sum frequency $f_A + f_B$ and a signal of a difference frequency $f_A - f_B$, 128-1 an oscillator having a frequency of 4 KHz, 128-2 an oscillator having a frequency of 97 MHz, and 129-1, 129-2, 129-3 and 129-4 band-pass filters respectiveLy having selected pass frequencies of 3.004 MHz, 2.996 MHz, 100.004 MHz and 99.996 MHz.

The operation of the clock generator of Fig. 7 will now be described. The crystal oscillator 126 generates a 3 MHz signal and the oscillator 128-1 generates a 4 KHz signal. These signals are mixed by the mixes 127-1 comprising for example a balanced modulator thereby generating two signals of 3.004 MHz and 2.996 MHz. Of the output signals from the mixer 127-1, the 3.004 MHz signal is supplied to the mixer 127-2 through the band-pass filter 129-1 and the 2.996 MHz signal is supplied to the mixer 127-3 via the band-pass filter 129-2. The mixer 127-2 mixes the 3.004 MHz signal and the 97 MHz signal supplied from the oscillator 128-2 to generate their sum and difference signals of which the sum signal or 100.004 MHz signal is passed through the band-pass filter 129-3 and generated as a clock frequency $f_1$. Similarly, the mixer 127-3 mixes the 2.996 MHz signal and the 97 MHz signal supplied from the oscillator 128-2 to generate its outputs of which the sum signal or 99.996 MHz signal is passed through the band-pass filter 129-4 and generated as a clock frequency $f_2$. By virtue of this construction, the difference between the clock frequencies $f_1$ and $f_2$ is accurately maintained at 8 KHZ. In accordance with the invention, the two clock frequencies $f_1$ and $f_2$ are used to generate two pseudo random signals and the measurement is made by utilizing the difference in period between the pseudo random signals. Therefore, it is important to accurately maintain the difference between the clock frequencies for the improvement of the measuring accuracy. As a result, a clock signal generator capable of maintaining this frequency difference constant may be constructed by using such technique as the PLL (phase-locked loop).

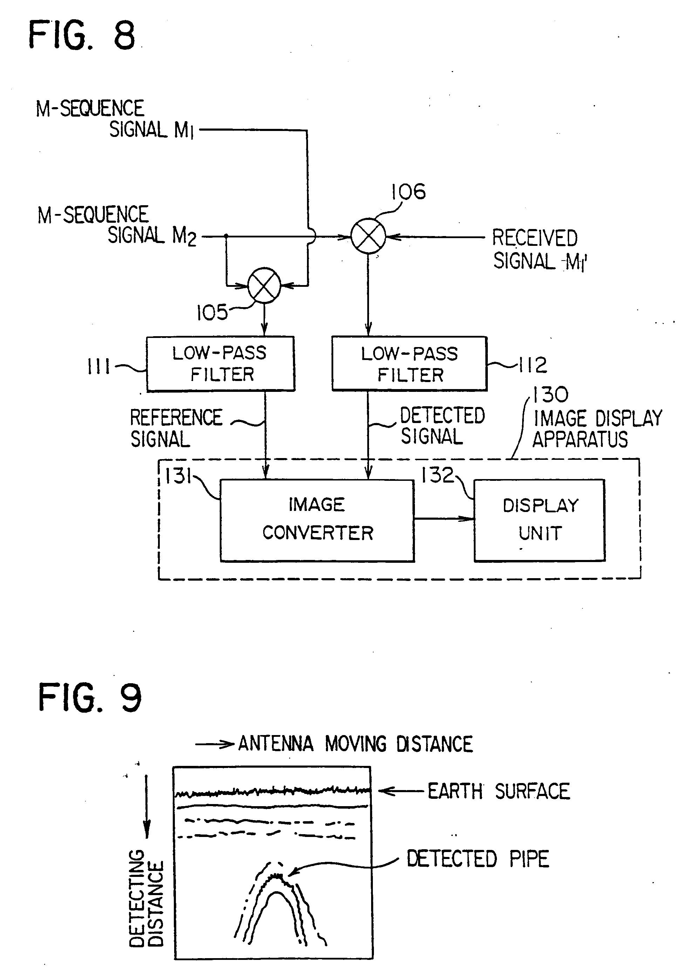

Referring now to Fig. 8, there is illustrated a block diagram of an image display apparatus for displaying a detected signal according to the invention in the form of an image. In the Figure, numerals 105, 106, 111 and 112 designate the same component parts as shown in Fig. 1. Numeral 130 designates the image display apparatus incorporating an image converter 131 and a display unit 132. The image converter 131 uses the output signal from the low-pass filter 111 as a reference signal for distance measurement and the output signal from the low-pass filter 112 as a detected signal. Using the time interval between the reference signal and the detected signal as the position information of the corresponding distance, the detected signal is displayed as a dark or light image signal in accordance with the received intensity. If the transmitting and receiving antennas are moved, in response to the distance moved the scanning starting position is moved on the CRT display. In this respect, the apparatus features that the detected signal is sufficiently low in speed and it can be directly supplied to the image converter without any sampling device as in the conventional case.

Fig. 9 is a diagram showing the display by image of a detected signal according to the invention. The Figure shows an example of the display by image of a detected signal of an underground object, e.g., a plastic pipe at the depth of 3 meters. in the Figure, the abscissa represents the moving distance of the transmitting and receiving antennas moved in a direction crossing the pipe and the ordinate represents the detecting distance. Also, the intensity of a detected signal is displayed in terms of the degree of light or shade. In the Figure, the upper part of a semi-circular waveform display opening downward indicates the detected pipe. This image of the semi-circular shape is due to the insufficient directivities of the transmitting and receiving antennas and this gives rise to no problem from the practical pipe detection point of view. Also, where the reflected wave from the ground surface is strong and the reflected wave from the target to be detected is weak, the method of separately moving the transmitting antenna and the receiving antenna to reduce the reflection from the ground surface is effective. The present invention is also available for the underground survey such as geo-tomagraphy using bore-hole antennas which operates in two holes each and detect transmitted electromagnetic waves through the ground in addition to the reflected waves in the ground.

While the embodiment of the invention as applied to the underground or underwater searching radar has been described, the present invention is also applicable to the distance measurement by the TDR (time domain reflector). The TDR is a technique generally used for the purpose of detecting the faulty location of an electric wire or the like and an electric pulse in the form of a monopulse or step-formed pulse is entered from one end of an electric wire. Thus, the electric pulse propagates and travels through the line so that it is returned to the signal input end by being reflected from the location of the changed characteristic impedance due to for example the disconnection or the short-circuiting of the line. The location of the changed characteristic impedance is detected in accordance with the time interval between the time of application of the electric pulse and the time of detection of the reflected signal and the propagation velocity of the entered electric signal in the line. Also, the TDR can be used for the detection of a fault point in an optical fiber by the use of a light pulse according to the same principle.

By applying the pseudo random signals according to the invention instead of applying the electric pulse signal to the TDR, the changed point of the characteristic impedance can be similarly detected in accordance with the time interval between the detection time of start signal for time measurement and the time that the maximum correlation output between the reflected pseudo random signal and the reference pseudo random signal is obtained and the propagation velocity of the entered electric signal in the line. This method has a feature that even if any noise enters the reflected wave, the correlator is not caused to operate erroneously due to the noise thereby ensuring stable measurement.

The distance measuring method and apparatus according to the second embodiment differ principally from the distance measuring method and apparatus according to the first embodiment in that instead of directly transmitting a first pseudo random signal, a spectrum spread signal obtained by phase modulating a carrier wave (e.g., an X-band wave having a frequency of about 10 GHz) by the first pseudo random signal is transmitted to a target to be detected and that after the processing of the correlation between the received wave and a second pseudo random signal, the received wave is subjected to coherent detection by coherent detecting means. The method of employing such carrier wave has the purpose of meeting the object of the second embodiment, that is, to adapt it to a measuring method in which an electromagnetic wave is propagated in the air to measure the slag level or molten metal level in a melting reduction furnace, converter or the like.

In accordance with the distance measuring method and apparatus of the second embodiment, the first pseudo random signal and the second pseudo random signal which is identical in pattern but slightly different in frequency from the first pseudo random signal are respectively generated from first and second pseudo random signal generating means and, after the phase modulation of a carrier wave by the first pseudo random signal, the resulting spectrum spread signal is transmitted by transmitting means toward a target to be detected and a second multiplier performs the multiplication of a received signal obtained by receiving the reflected wave from the target by receiving means and the second pseudo random signal. When there is the in-phase condition between the modulated phase of the received signal phase modulated by the first pseudo random signal and the phase of the second pseudo random signal, the multiplication result obtained as an output of the second multiplier is the in-phase carrier wave and it is subjected to synchronization detection by the following coherent detecting means. This detected output is generated as a pulse-like target detection signal through detection signal generating means comprising a pair of low-pass filters, a pair of squaring devices and an adder.

However, while the first and second pseudo random signals are codes of the same pattern, the signal generating means are slightly different in frequency with the result that starting at the time that the two signals are in phase (that is, the correlation output between the two signals reaches a maximum), the phases deviate from each other with the passage of time so that there is no longer any correlation between the two pseudo random signals when the phase deviation becomes greater than one code. In this condition, the phase of the carrier wave obtained as the result of the multiplication of the received signal and the second pseudo random signal becomes random and the frequency band of the carrier wave is limited by the low-pass filter through which it passes after the synchronization detection by the coherent detecting means. Thus, no target detection signal is generated.

Then, as the time passes further so that the phase deviation between the first and second pseudo random signals amounts to just one period of one of the pseudo random signals, the in-phase condition is again attained and the correlation output of the two signals reaches a maximum, thereby generating again a pulse-like target detection signal through the coherent detecting means and the detection signal generating means. As a result, this phenomenon is repeated at intervals of a given time and a periodic pulse-like signal is generated as a detected target signal.

On the other hand, it is necessary to establish a reference time for measuring the time interval between the reference time and the detection time of a target detection signal from the received signal and the required time reference signal is generated in the following manner. This time reference signal is generated as a pulse-like signal of the same period as the target detection signal by directly multiplying the first and second pseudo random signals by a first multiplier and extracting the result of the multiplication or the time sequence pattern through a low-pass filter.

Therefore, since the time interval between the time of generation of the time reference signal and the time of generation of the target detection signal derived from the received signal represents an expanded value of the propagation time of the electromagnetic wave to go back and forth between the transmitting and receiving antennas and the target, the time interval between the two signals is converted into the distance between the transmitting and receiving antennas and the target.

The theoretic expressions of the first embodiment can be used as such as the theoretic expressions relating to the operating times of the second embodiment. The reason is that the second embodiment operates in time at the same times as the first embodiment excepting that in the second embodiment the signal of the modulated carrier wave is transmitted and the received signal is subjected to coherent detection after the correlation calculation. In other words, it is possible to apply equation (1) to a period $T_B$ at which a reference signal is generated, equation (2) to a measured time $T_D$ and equation (3) to the calculation of the distance x to a target to be detected.

In the distance measuring apparatus according to the second embodiment, the coherent detecting means of the carrier wave performs the operation of extracting a part of the output of transmitting carrier wave generating means by a first distributor, converting the extracted output into an in-phase component I and a quadrature component Q, dividing the carrier wave generated from the second multiplier into signals $R_1$ and $R_2$ through a second distributor, and generating as orthogonal detection signals a product $I \cdot R_1$ of the multiplication of the signals I and $R_1$ by a third multiplier and a product $Q \cdot R_2$ of the multiplication of the signals Q and $R_2$ by a fourth multiplier.

In the distance measuring apparatus according to the second embodiment, time difference measuring means for the time sequence pattern of the product by the first multiplier and the time sequence patterns of the orthogonal detection signals is designed so that a time-interval timer measures the interval of time between the time of generation of the maximum value of a pulse-like reference signal obtained by subjecting the output of the first multiplier to band limitation by the first low-pass filter and the time of generation of the maximum value of a pulse-like detection signal obtained by subjecting the products $I \cdot R_1$ and $Q \cdot R_2$ of the third and fourth multipliers to band limitation by the second and third low-pass filters, squaring the resulting signals by a pair of squaring devices and obtaining the sum of the resulting squared values by an adder.

The distance measuring apparatus according to the second embodiment is used in such a manner that after the apparatus has been arranged on a melting reduction furnace, converter or blast furnace, the transmitting and receiving antennas are inserted into the furnace through waveguides and the transmission and reception of an electromagnetic wave are effected, thereby effecting the measurement of such level as the slag level, molten steel level or charged raw material level.

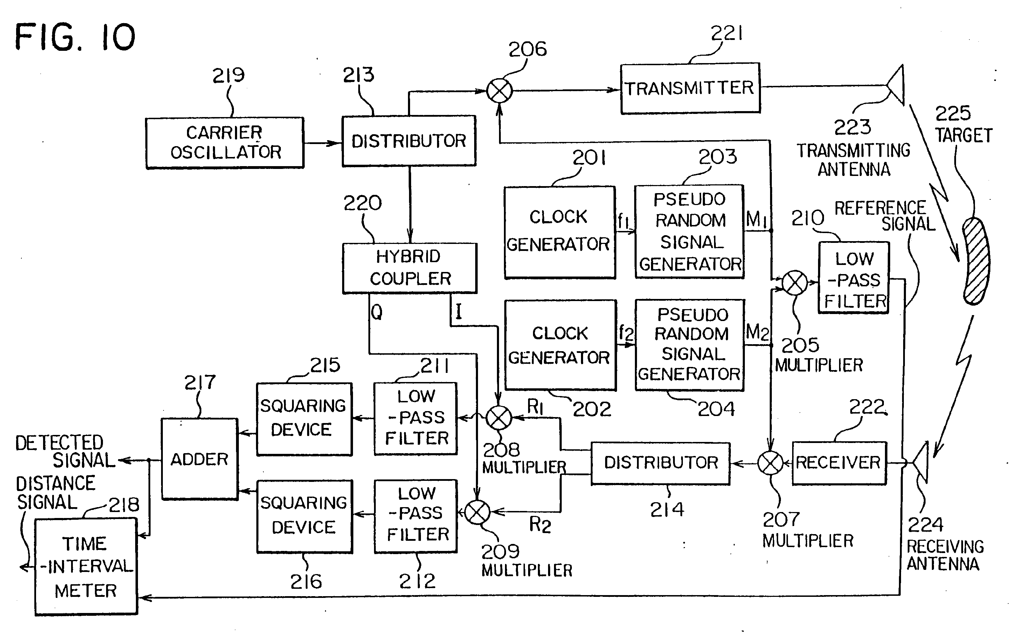

Referring to the block diagram of Fig. 10 showing an example of the distance measuring apparatus according to the second embodiment, numerals 201 and 202 designate clock generators, 203 and 204 pseudo random signal generators, and 205 to 209 multipliers each composed for example of a double balanced mixer. Numerals 210 to 212 designate low-pass filters, 213 and 214 distributors, 215 and 216 squaring devices, 217 an adder, 218 a time-interval meter, 219 a carrier oscillator, 220 a hybrid coupler, 221 a transmitter, 222 a receiver, 223 a transmitting antenna, 224 a receiving antenna, and 225 a target.

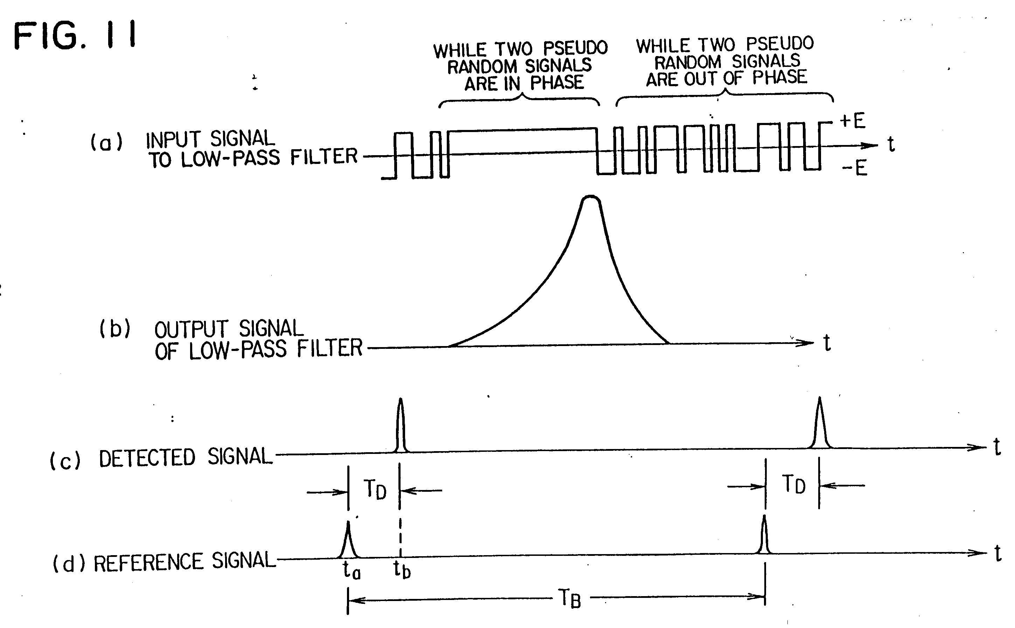

Fig. 11 shows a plurality of signal waveforms useful for explaining the operation of the apparatus shown in Fig.10.

The operation of the apparatus of Fig. 10 will now be described with reference to Fig. 11. The maximal length sequence signal generators 103 and 104 of Fig. 3 can be used as such for the pseudo random signal generators 203 and 204, respectively. Thus, in the description of Fig. 10, the pseudo random signal generators 203 and 204 will be explained as adapted to respectively generate 7-bit maximal length sequence signals $M_1$ and $M_2$. However, in addition to the maximal length sequence signals, Gold-sequence signals, JPL-sequence signals or the like may be used as the pseudo random signals. While, likely as the clock generators 101 and 102 of Fig. 3, the clock generators 201 and 202 each incorporates a crystal oscillator to generate clock signals of a sufficiently stable frequency, their generated frequencies are slightly different from each other. Thus, even in the case of Fig.10, it is assumed that the generated frequencies $f_1$ of the clock generator 2D1 is 100.004 MHz and the generated frequency $f_2$ of the clock generator 202 is 99.996 MHz and that the frequency difference is $f_1 - f_2 = 8$ KHz. The clock signals $f_1$ and $f_2$ of the clock generators 201 and 202 are respectively supplied to the pseudo random signal generators 203 and 204. While there is a slight difference in the length of one period between the pseudo random signal generators 203 and 204 due to the frequency difference between their driving clock signals, they respectively generate maximal length sequence signals $M_1$ and $M_2$ of the same pattern. The output $M_1$ of the pseudo random signal generator 203 is applied to the multipliers 205 and 206 and the output $M_2$ of the pseudo random signal generator 204 is applied to the multipliers 205 and 207.

The carrier oscillator 219 generates for example a microwave having a frequency of about 10 GHz and its output signal is distributed by the distributor 213 so as to be supplied to the multiplier 206 and the hybrid couper 220. The multiplier 206 is composed for example of a double balanced mixer which performs the multiplication of the carrier wave having a frequency of about 10 GHz applied from the distributor 213 and the maximal length sequence signal $M_1$ applied from the pseudo random signal generator 203 so that a spectrum spread signal resulting from phase modulation of the carrier wave is generated and supplied to the transmitter 221. The transmitter 221 power amplifies the applied spectrum spread signal, converts and radiates it as an electromagnetic wave to the target 225 through the transmitting antenna 223. It is to be noted that the electromagnetic wave of the frequency 10 GHz has the wavelength of 3 cm in the air and it is sufficiently large as compared with the size (diameter) of dust within a steel making furnace, for example, thereby tending to be not easily affected by the dust, etc. Also, the transmitting antenna 223 and the receiving antenna 224 are each composed for example of a horn antenna and its directivity is sharply confined so as to reduce as far as possible the reflected power from other than the target to be measured. Then, the antenna gain is selected for example about 20 dB for each of these antennas. The electromagnetic wave radiated toward the target 225 from the transmitting antenna 223 is reflected by the target 225, converted to an electric signal through the receiving antenna 224 and applied to the receiver 222. The timing of supplying the input signal to the receiver 222 is of course delayed from the timing of the radiation of the electromagnetic wave from the transmitting antenna 233 by the propagation time of the electromagnetic wave required for it to go back and forth the distance to the target 225 and reach the receiving antenna 224. The receiver 222 amplifies the input signal and then supplies it to the multiplier 207.

On the other hand, the maximal length sequence signals $M_1$ and $M_2$ respectively applied from the pseudo random signal generators 203 and 204 to the multiplier 205 are multiplied and the time sequence signal of the resulting product is supplied to the low-pass filter 210. Shown in (a) of Fig. 11 is the waveform showing the input signal to the low-pass filter 210, e.g., the time sequence signal or the product of the multiplier 205, and the waveform shows that an output voltage of +E is generated continuously while the two pseudo random signals are in phase and output voltages of +E and -E are generated randomly while the two signals are out of phase. Each of the low-pass filters 210 to 212 performs a frequency band limiting operation and hence a sort of integrating function, so that a pulse-like signal such as shown in (b) of Fig. 11 is generated as an integrated signal of the processed correlation value between the two signals while the two signals are in phase. On the contrary, the output of the low-pass filter is reduced to zero while the two signals are out of phase. Thus, a pulse-like signal is generated periodically at the output of the low-pass filter 210. This pulse-like signal is supplied as a time reference signal to the time-interval meter 218. The period $T_B$ of this reference signal can be computed from the previously mentioned equation (1) as $T_B = 15.875$ ms since, in this embodiment, the wave number of one period of the maximal length sequence signals is N = 127 and the frequencies are $f_1 = 100.004$ MHz and $f_2 = 99.996$ MHz as the same as in the case of Fig. 3. This reference signal and its period $T_B$ are shown in (d) of Fig. 11.

Also, the received signal from the receiver 222 and the maximal length sequence signal $M_2$ from the pseudo random signal generator 204 are applied to the multiplier 207 to multiply the two signals. The multiplication result of the multiplier 207 is generated as the in-phase carrier signal while the modulated phase of the received signal of the transmitting carrier wave which was phase modulated by the first maximal length sequence signal $M_1$ is the same as the phase of the second maximal length sequence signal $M_2$,

whereas it is generated as the carrier wave of a random phase while the modulated phase of the received signal is not the same as the phase of the maximal length sequence signal $M_2$, and the carrier wave is supplied to the distributor 214. The distributor 214 distributes the input signal in two so that its distributed outputs $R_1$ and $R_2$ are respectively supplied to the multipliers 208 and 209. The hybrid coupler 220, which is supplied with a part of the transmitting carrier wave from the distributor 213, generates a signal I of the in-phase component (phase zero) and a signal Q of the quardrature component (phase quadrature) with respect to the input to the input signal and the signals are respectively supplied to the multipliers 208 and 209. The multiplier 208 multiplies the signal I applied from the hybrid coupler 220 (i.e., the signal which is in phase with the output of the carrier oscillator 219) and the signal $R_1$ applied from the distributor 214 and similarly the multiplier 209 multiplies the input signals Q (i.e., the signal having a 90-degree phase difference with the output of the carrier oscillator 219) and $R_2$, thereby respectively extracting the in-phase component ($I \cdot R_1$) and the phase quadrature component ($Q \cdot R_2$) of the received signal and generating them as orthogonal detection signals. The orthogonal detection signals or the signals $I \cdot R_1$ and $Q \cdot R_2$ are respectively supplied to the low-pass filters 211 and 212. Each of the low-pass filters 211 and 212 performs a frequency band limiting operation and hence an integrating function and thus it integrates the processed correlation value of the two signals. In other words, when the signal $R_1$ applied to the multiplier 208 from the multiplier 207 through the distributor 214 and the signal I applied to the multiplier 208 from the hybrid coupler 220 are in phase and similarly when the signals $R_2$ and Q applied to the multiplier 209 are in phase, the output signals of the multipliers 208 and 209 take the form of pulse signals of a constant polarity (pulse signals of the voltage +E) and the signals are respectively integrated by the low-pass filters 211 and 212, thereby generating large positive voltages at their outputs. On the contrary, if the signals $R_1$ and I are out of phase and if the signals $R_2$ and Q are out of phase, the output signals of the multiplies 208 and 209 take the form of pulse signals of randomly varying positive and negative polarities (i.e., pulse signals of the voltages +E and -E) and these signals are respectively integrated by the low-pass filters 211 and 212, thereby generating no outputs. After having been integrated by the low-pass filters 211 and 212 in this way, the in-phase component signal and the phase quadrature component signal are respectively supplied to the squaring devices 215 and 216. Each of the squaring devices 215 and 216 squares the amplitude of the input signal and supplies the resulting output signal to the adder 217. The adder 217 adds the two input signals so that a pulse-like detected target signal such as shown in (c) of Fig. 11 is generated and supplied to the time-interval meter 218. Assume now that the maximum value of this detected target signal occurs at a time $t_b$. While the described method of detecting the in-phase component and the phase quadrature component of the transmitting carrier wave from the signal obtained by correlation process on the received signal and the maximal length sequence signal $M_2$, squaring the orthogonal detection signals after the integration thereof and generating a detected target signal as the sum of the pair of squared values is more or less complicated in construction, the method can produce a detected target signal of a high degree of sensitivity. Also, due to the production of the correlation output of the pseudo random signals such as maximal length sequence signals, the effect of noise is reduced and the signals are enhanced, thereby realizing a measuring system having a high signal-to-noise (S/N) ratio. As regards the carrier detecting method, there is of course a detecting method employing a crystal which, although low in sensitivity, is simplified in construction and this method may be used depending on the specification and cost.

The time-interval meter 218 measures the time interval $T_D$ between the time ta of generation of the maximum value of the reference signal applied from the low-pass filter 210 and the time tb of generation of the maximum value of the detected target signal applied from the adder 217. For this purpose, the time-interval meter 218 has a function of detecting the maximum value generation times of the two input signals. For instance, the input voltage value is successively sampled and held by clock signals in such a manner that the sampled value by the current clock signal and the sampled value by the preceding clock signal are successively compared by a voltage comparator and the time of transition from the positive-going to the negative-going condition of the input signal in time is detected, thereby detecting the time of generation of the maximum value of the input signal. The previously mentioned time interval $T_D$ is shown as the interval of time between the time ta of generation of the maximum value of the reference signal shown in (d) of Fig. 11 and the time tb of generation of the maximum value of the detected signal shown in (c) of Fig. 11. As shown by the previously mentioned equation (2), the time interval $T_D$ is obtained in an expanded form in time as $f_1/(f_1 - f_2)$ times the propagation time $\tau$ actually required for the electromagnetic wave to go back and forth the distance between the transmitting and receiving antennas 223 and 224 and the target 225. In the case of this embodiment, $f_1 = 100.004$ MHz and $f_2 = 99.996$ MHz so that in accordance with the previously mentioned equation (4), the measured time $T_D$ is expanded in time to 12,500 times the wave propagation time $\tau$. It is to be noted that the measured time $T_D$ is obtained at intervals of the period $T_B$ of the reference signal.

It will thus be seen that in accordance with this embodiment the measured time is expanded very greatly and therefor the distance to any target can be measured accurately even if the distance is short. Therefore, the embodiment can be said suitable as a short-distance level measuring apparatus for measuring for example the slag level or molten steel level in a furnace.

Therefore, by determining the distance of x meters from the transmitting and receiving antennas 223 and 224 to the target 225 from equation (3), we obtain the following equation (5):

$$x = (f_1 - f_2)/2f_1 \cdot V \cdot T_D = 1.2 \times 10^4 \cdot T_D \quad (5)$$

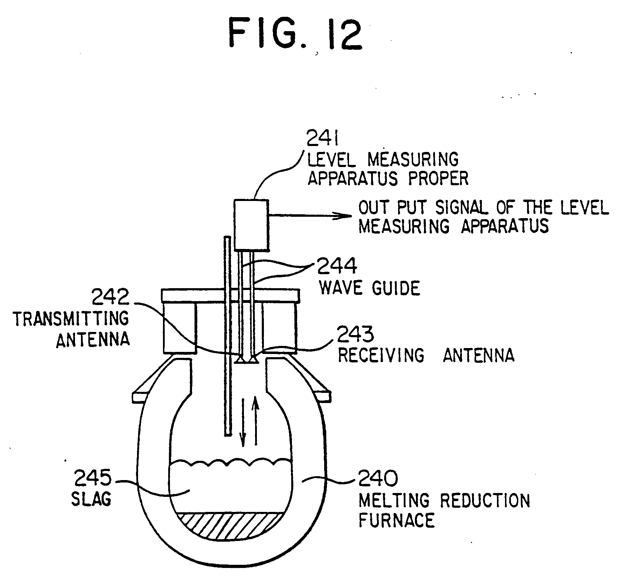

Referring now to Fig. 12, there is illustrated a schematic diagram showing the second embodiment of the invention which is applied to an apparatus for measuring the slag level in a melting reduction furnace. In the Figure numeral 240 designates a melting reduction furnace, 241 a level measuring apparatus proper, 242 a transmitting antenna, 243 a receiving antenna, 244 waveguides, and 245 slag.

The construction of Fig. 12 will now be described. The transmitting and receiving antennas 242 and 243, which are installed inside the furnace, are composed of water-cooled horn antennas and are connected through the waveguides 244 to the level measuring apparatus 241 disposed at the top of the melting reduction furnace 240. The level of the slag 245 within the furnace is obtained by transmitting an electromagnetic wave from the level measuring apparatus 241 through the waveguide 244 and the transmitting antenna 242, receiving the electromagnetic wave reflected from the surface of the slag 245 through the receiving antenna 243 and the waveguide 244 and then substituting the previously mentioned measured time $T_D$ into equation (5) for computation. Actually, the measure value of the level measuring apparatus according to the present embodiment showed a satisfactory coincidence with the measurement result obtained by measuring the position of slag deposition on the sublance.

In addition, in a measuring environment tending to cause any undesired reflected wave, e.g., the limited space in a furnace, in accordance with this embodiment the advantage of the greatly expanded time for measuring the distance to the target is utilized in such a manner that only the detected signal due to the desired reflected wave is extracted through a time gate circuit and the detected signals due to the undesired reflected waves are eliminated, thereby stably measuring the desired level position or distance.

While, in this embodiment, the transmitting and receiving antennas comprises two separately arranged antennas, the invention is not limited thereto and the antenna system may be designed so that a single antenna is used as a common transmitting and receiving antenna and a directional coupler or duplexer is added to separate a transmitted signal from a received signal.

Further, while the present embodiment has been described as applied for level measuring purposes, by suitably selecting clock frequencies for generating two pseudo random signals, the embodiment can be satisfactorily applied to the distance measurement of ordinary target including long distant ones, such as, flying targets, ships and automobiles.

Still further, while, in this embodiment, the carrier wave comprises a microwave of about 10 GHz by way of example, it is also possible to use such electromagnetic wave as millimeter wave as well as such electromagnetic wave as light, sound wave or ultrasonic wave or acoustic wave as the carrier wave.

Still further, the apparatus may be additionally provided with a clock to compute a change of the measured distance of a target in unit time so as to measure the speed of the target.

## Claims

1. A distance measuring method comprising the steps of generating a first pseudo random signal (M1) having a clock frequency signal $f_1$, transmitting said generated first pseudo random signal towards a target (116) as an electromagnetic wave signal, receiving a signal (M'1) reflected from said target, performing correlation processing on said received signal and measuring a distance to said target on the basis of said correlation processed signal;

characterised in that the method further comprises the steps of:

generating a second pseudo random signal (M2) which is the same in pattern as said first pseudo random signal (M1) but having a clock frequency $f_2$ which is slightly different from said frequency $f_1$;

multiplying said first pseudo random signal (M1) by said second pseudo random signal to make a first product;

multiplying said received signal (M'1) reflected from said target by said second pseudo random signal (M2) to make a second product;

obtaining a first smoothed signal by passing said first product through a first low-pass filter (111);

obtaining a second smoothed signal by passing said second product through a second low-pass filter (112);

generating a first pulse when the value of said first smoothed signal reaches a maximum;

generating a second pulse when the value of said second smoothed signal reaches a maximum;

measuring the time interval between the point when said first pulse is generated and the point when said second pulse is generated,

calculating the distance to said target as the result of multiplying one half of said time interval by the propagation velocity of said electromagnetic wave to form a first operation value as the product of said multiplication, dividing the frequency difference between said clock frequencies $f_1$ and $f_2$ by said clock frequency $f_1$ to form a second operation value as the quotient of said division and multiplying said first operation value by said second operation value.

2. A distance measuring method according to Claim 1 further comprising the steps of:

generating a reference carrier wave;

modulating said reference carrier in coded phase in compliance with said first pseudo random signal (M1);

transmitting said phase modulated carrier toward the target (225) as an electromagnetic wave;

receiving a signal reflected from said target (225);

multiplying said received signal by said second pseudo random signal (M2) and outputting the phase correlated carrier wave as the product of said multiplication;

respectively multiplying said multiplied and outputted phase correlated carrier wave by an inphase component (I signal) and by a quadrature component (Q signal) which are extracted from said reference carrier wave, their phases being mutually orthogonal, and respectively outputting both products, the real part and the imaginary part of said orthogonal detected signal;

respectively smoothing said real part and said imaginary part of said orthogonal detected signal;

respectively squaring the respective smoothed components obtained in the preceding step and adding the respective squared values, then outputting the squared sum value of the respective smoothed components of the orthogonal detected signal;

multiplying said first pseudo random signal (M1) by said second pseudo random signal (M2) to calculate a first product;

processing said first product through a first low pass filter (210) to output a first smoothed signal;

measuring a time interval between the point when the value of said first smoothed signal reaches a maximum and the point when said squared sum value of the respective smoothed components of orthogonal detected signal reaches a maximum; and

calculating the distance towards said target (225) by performing the same process of calculation as the process described in Claim 1 from said time interval.

3. A distance measuring apparatus comprising means (103) for generating a first pseudo random signal (M1) having a clock frequency $f_1$, means (107, 109) for transmitting an output of said first pseudo random signal generating means as an electromagnetic wave signal towards a target (116) receiving means (108, 110) for receiving a reflected signal from said target (116) to obtain a received signal, means for performing correlation and detection processing on the output signal of said receiving means and means for measuring a distance towards said target (116) on the basis of said processed signal;

characterised in that said distance measuring apparatus further comprises:

means (104) for generating a second pseudo random signal (M2) which is the same in pattern as said first pseudo random signal (M1) but having a clock frequency $f_2$ which is slightly different from said clock frequency $f_1$;

a first multiplier (105) for multiplying the output from said means for generating first pseudo random signal by the output from said means for generating a second pseudo random signal;

a second multiplier (106) for multiplying the output of said receiving means by the output of said means for generating a second pseudo random signal;

a first low pass filter (111) for smoothing the output of said first multiplier and outputting a first smoothed signal;

a second low pass filter (112) for smoothing the output of said second multiplier and outputting a second smoothed signal;

a first pulse generating means for generating a pulse when the first smoothed signal from said first low pass filter (105) reaches a maximum;

a second pulse generating means for generating a pulse when the second smoothed signal obtained from said second low pass filter (106) reaches a maximum;

measuring means (115) for measuring the time interval between the point when the output pulse is generated by said first pulse generating means and the point when the output pulse is generated by said second pulse generating means; and

calculating means for multiplying one half of said time interval obtained from said measuring means by propagation velocity of said electromagnetic wave to form a first operation value as the product of said multiplication, dividing the frequency difference between said clock frequencies $f_1$ and $f_2$ by said clock frequency $f_1$ to

form a second operation value as the quotient of said division and multiplying said first operation value by said second operation value to work out the distance toward said target as the product of said multiplication.

4. A distance measuring apparatus according to Claim 3 wherein:

said first pseudo random signal generating means comprises a first clock generator (101) having the clock frequency $f_1$ and a first clock-synchronizing type pseudo random signal generating means (103) to be driven by an output of said first clock generator (101);

said second pseudo random signal generating means comprises a second clock generator (102) having the clock frequency $f_2$ and a second clock-synchronizing type pseudo random signal generating means (104) to be driven by an output of said second clock generator (102);

said first clock-synchronizing means has the same constructions as that of said second clock-synchronizing type pseudo random signal generating means; and

the clock frequency $f_1$ of said first clock generator (101) is slightly different from the clock frequency $f_2$ of said second clock generator (102).

5. A distance measuring apparatus according to Claim 3 further comprising:

carrier wave generating means (219) for generating a reference carrier wave;

modulating means (206) for modulating the output of said carrier wave generating means (219) in coded phase by each code signal of said first pseudo random signal (M1);

transmitting means (221) for transmitting the output of said modulating means (206) toward the target (225) as an electromagnetic wave signal;

receiving means for receiving a signal reflected from said target (225);

a second multiplier (207) for multiplying the output of said receiving means by the output of said second pseudo random signal generating means (204) and outputting the phase correlated carrier wave as the product of said multiplication;

orthogonal signal detecting means (208), (209) for respectively multiplying said phase correlated carrier wave outputted from said second multiplier (207) by an inphase component (I signal) and by a quadrature component (Q signal) which are extracted from said carrier wave generating means (219), their phases being mutually orthogonal, and outputting respective both products, the real part and the imaginary part of the orthogonal detected signal;

a pair of low pass filters (211), (212) for respectively smoothing said real part and imaginary part outputted from said orthogonal signal detecting means;

a pair of squaring means (215), (216) for respectively squaring the output signals outputted from said a pair of low pass filters (211), (212);

an adder (217) for adding the output signals respectively outputted from said a pair of squaring means and outputting the squared sum value of said smoothed two components of orthogonal detected signal;

a first multiplier (205) for multiplying said first pseudo random signal (M1) by said second pseudo random signal (M2);

a first low pass filter (210) for smoothing the output signal of said first multiplier (205) and outputting a first smoothed signal and

time interval measuring means (218) for measuring a time interval between the point when the value of output signal of said low pass filter (210) reaches a maximum and the point when said squared sum value of smoothed two components of orthogonal detected signal reaches a maximum; and

calculation means for calculating the distance towards said target (225) from said time interval measured by said time interval measuring means (218) by performing the same process of calculation as the process described in Claim 3.

6. A distance measuring apparatus according to Claim 5, wherein said orthogonal signal detecting means comprises:

a first distributor (213) for extracting a part of the output of said carrier wave generating means (219);

a hybrid coupler (220) for receiving an output of said first distributor (213), converting the same to generate said I signal and Q signal wherein their phases are mutually orthogonal and outputting them;

a second distributor (214) for dividing said phase correlated carrier wave outputted from said second multiplier (207) into an $R_1$ signal and an $R_2$ signal;

a third multiplier (208) for multiplying the I signal outputted from said hybrid coupler (220) by the $R_1$ signal outputted from said second distributor (214); and

a fourth multiplier (209) for multiplying the Q signal outputted from said hybrid coupler (220) by the $R_2$ signal outputted from said second distributor (207).

7. A distance measuring apparatus according to Claim 5, wherein said distance measuring apparatus is arranged on an upper part of either one of a converter and blast furnace to measure any one of a slag level, molten steel level and charged raw material level.

8. A distance measuring apparatus according to Claim 6, wherein said distance measuring apparatus is arranged on an upper part of either one of a converter and blast furnace to measure any one of a slag level, molten steel level and charged raw material level.

**Patentansprüche**

1. Ein Entfernungsmeßverfahren mit den Schritten: Erzeugen eines ersten Pseudozufallsignals (M1) mit einem Taktfrequenzsignal $f_1$, Übertragen des ersten erzeugten Pseudozufallsignals als ein elektromagnetisches Wellensignal zu einem Ziel (116) hin, Empfangen eines vom Ziel reflektierten Signals (M1'), Durchführen einer Korrelationsberechnung mit dem empfangenen Signal und Messung der Entfernung zum Ziel aufgrund des durch die Korrelation berechneten Signals; **dadurch gekennzeichnet, daß** das Verfahren des weiteren die Schritte aufweist:
   Erzeugen eines zweiten Pseudozufallsignals (M2), welches dasselbe Muster wie das erste Pseudozufallsignal (M1) hat, aber mit einer Taktfrequenz $f_2$, welche leicht unterschiedlich von der Frequenz $f_1$ ist;
   Multiplizieren des ersten Pseudozufallsignals (M1) mit dem zweiten Pseudozufallsignal, um ein erstes Produkt zu bilden;
   Multiplizieren des vom Ziel reflektierten empfangenen Signals mit dem zweiten Pseudozufallsignal (M2), um ein zweites Produkt zu bilden;
   Erhalten eines ersten geglätteten Signals durch Passieren des ersten Produkts durch ein erstes Tiefpassfilter (111);
   Erhalten eines zweiten geglätteten Signals durch Passieren des zweiten Produkts durch ein zweites Tiefpassfilter (112);
   Erzeugen eines ersten Impulses, wenn der Wert des ersten geglätteten Signals ein Maximum erreicht;
   Erzeugen eines zweiten Impulses, wenn der Wert des zweiten geglätteten Signals ein Maximum erreicht;
   Messung des Zeitabschnitts zwischen dem Zeitpunkt, wenn der erste Impuls erzeugt wurde und dem Zeitpunkt, wenn der zweite Impulse erzeugt wurde;
   Berechnen der Entfernung zum Ziel als das Ergebnis der Multiplikation einer Hälfte des Zeitabschnitts mit der Ausbreitungsgeschwindigkeit der elektromagnetischen Welle, um einen ersten Betriebswert als das Produkt der Multiplikation zu bilden Teilen des Frequenzunterschieds zwischen den Taktfrequenzen $f_1$ und $f_2$ durch die Taktfrequenz $f_1$, um einen zweiten Betriebswert als den Quotienten der Division zu bilden und Multiplizieren des ersten Betriebswerts mit dem zweiten Betriebswert.

2. Ein Entfernungsmeßverfahren gemäß Anspruch 1, welches des weiteren die Schritte aufweist:
   Erzeugen einer Referenzträgerwelle;
   Modulieren des Referenzträgers in kodierter Phase in Übereinstimmung mit dem ersten Pseudozufallsignal (M1);
   Übertragen des phasenmodulierten Trägers als eine elektromagnetische Welle zum Ziel (225) hin;
   Empfangen eines vom Ziel (225) reflektierten Signals;
   Multiplizieren des empfangenen Signals mit dem zweiten Pseudozufallsignal (M2) und Ausgeben der phasenkorrelierten Trägerwelle als das Produkt der Multiplikation;
   jeweiliges Multiplizieren der multiplizierten und ausgegebenen phasenkorrelierten Tägerwelle mit einer gleichphasigen Komponente (I Signal) und mit einer Quadraturkomponente (Q Signal), welche aus der Referenzträgerwelle extrahiert werden, wobei deren Phasen gegenseitig orthogonal sind, und jeweiliges Ausgeben der beiden Produkte, des Realteils und des Imaginärteils des orthogonal empfangenen Signals;
   jeweiliges Glätten des Realteils und des Imaginärteils des orthogonal detektierten Signals;
   jeweiliges Quadrieren der jeweiligen geglätteten im vorherigen Schritt erhaltenen Komponenten und Addieren der jeweiligen quadrierten Werte, dann Ausgeben des quadrierten Summenwerts der jeweiligen geglätteten Komponenten des orthogonal detektierten Signals;
   Multiplizieren des ersten Pseudozufallsignals (M1) mit dem zweiten Pseudozufallsignal (M2), um ein erstes Produkt zu berechnen;
   Verarbeiten des ersten Produkts durch ein erstes Tiefpassfilter (210), um ein erstes geglättetes Signal auszugeben;
   Messen eines Zeitabschnitts zwischen dem Zeitpunkt, wenn der Wert des ersten geglätteten Signals ein Maximum erreicht und dem Zeitpunkt, wenn der quadrierte Summenwert der jeweiligen geglätteten Komponenten des orthogonal detektierten Signals ein Maximum erreicht; und
   Berechnen der Entfernung zum Ziel (225) durch Durchführen des gleichen wie in Anspruch 1 beschriebenen Berechnungsverfahrens aus dem Zeitabschnitt.

3. Eine Entfernungsmeßeinrichtung mit Mitteln (103) zum Erzeugen eines ersten Pseudozufallsignals (M1) mit einer Taktfrequenz f₁, Mitteln (107, 109) zum Übertragen eines Ausgangssignals der ersten Pseudozufallsignalerzeugungsmittel als ein elektromagnetisches Wellensignal zu einem Ziel (116) hin, Empfangsmitteln (108, 110) zum Empfangen eines reflektierten Signals vom Ziel (116), um ein empfangenes Signal zu erhalten, Mitteln zur Durchführung einer Korrelation und einer Detektionsverarbeitung am Ausgangssignal der Empfangsmittel und Mittel zum Messen einer Entfernung zum Ziel (116) hin aufgrund der erzeugten Signale;
**dadurch gekennzeichnet, daß**
die Entfernungsmeßeinrichtung des weiteren aufweist:

Mittel (104) zum Erzeugen eines zweiten Pseudozufallsignals (M2), welches dasselbe Muster wie das erste Pseudozufallsignal (M1) hat, aber mit einer Taktfrequenz f₂, welche leicht unterschiedlich von der Taktfrequenz f₁ ist;

einen ersten Multiplizierer (105) zum Multiplizieren des Ausgangssignals der Mittel zum Erzeugen eines ersten Pseudozufallsignals mit dem Ausgangssignal der Mittel zum Erzeugen eines zweiten Pseudozufallsignals;

einen zweiten Multiplizierer (106) zum Multiplizieren des Ausgangssignals der Empfangsmittel mit dem Ausgangssignal der Mittel zum Erzeugen eines zweiten Pseudozufallsignals;

ein erstes Tiefpassfilter (111) zum Glätten des Ausgangssignals des ersten Multiplizierers und Ausgeben eines ersten geglätteten Signals;

ein zweites Tiefpassfilter (112) zum Glätten des Ausgangssignals des zweiten Multiplizierers und Ausgeben eines zweiten geglätteten Signals;

ein erstes Impulserzeugungsmittel zur Erzeugung eines Impulses, wenn das erste geglättete Signal des ersten Tiefpassfilters (105) ein Maximum erreicht;

ein zweites Impulserzeugungsmittel zum Erzeugen eines Impulses, wenn das zweite geglättete des zweiten Tiefpassfilter (106) erhaltene Signal ein Maximum erreicht;

Meßmittel (115) zum Messen des Zeitabschnitts zwischen dem Zeitpunkt, wenn der Ausgangsimpuls durch das erste Impulserzeugungsmittel erzeugt wurde und dem Zeitpunkt, wenn der Ausgangsimpuls durch das zweite Impulserzeugungsmittel erzeugt wurde; und

Berechnungsmittel zum Multiplizieren der einen Hälfte des von den Meßmitteln erhaltenen Zeitabschnitts mit der Ausbreitungsgeschwindigkeit der elektromagnetischen Welle, um einen ersten Betriebswert als das Produkt der Multiplikation zu bilden, Teilen des Frequenzunterschieds zwischen den Taktfrequenzen f₁ und f₂ durch die Taktfrequenz f₁, um einen zweiten Betriebswert als den Quotienten der Division zu bilden und Multiplizieren des ersten Betriebswerts mit dem zweiten Betriebswert, um die Entfernung zum Ziel hin als Produkt der Multiplikation herauszuarbeiten.

4. Eine Entfernungsmeßeinrichtung gemäß Anspruch 3 wobei:

das erste Pseudozufallsignalerzeugungsmittel einen ersten Taktgenerator (101) mit der Taktfrequenz f₁ und ein erstes Pseudozufallsignalerzeugungsmittel (103) vom Taktsynchronisationstyp aufweist, welches durch ein Ausgangssignal des ersten Taktgenerators (101) ansteuerbar ist;

das zweite Pseudozufallsignalerzeugungsmittel einen zweiten Taktgenerator (102) mit der Taktfrequenz f₂ und ein zweites Pseudozufallsignalerzeugungsmittel (104) vom Taktsynchronisationstyp aufweist, welches durch ein Ausgangssignal des zweiten Taktgenerators (102) ansteuerbar ist;

die ersten Taktsynchronisationsmittel denselben Aufbau wie die zweiten Pseudozufallsignalerzeugungsmittel vom Taktsynchronisationstyp haben; und

die Taktfrequenz f₁ des ersten Taktgenerators (101) leicht unterschiedlich von der Taktfrequenz f₂ des zweiten Taktgenerators (102) ist.

5. Eine Entfernungsmeßeinrichtung gemäß Anspruch 3, welche des weiteren aufweist:

ein Trägerwelle-Erzeugungsmittel (219) zur Erzeugung einer Referenzträgerwelle;

Modulationsmittel (206) zum Modulieren des Ausgangsignals der Trägerwelle-Erzeugungsmittel (219) in kodierter Phase mit jedem Codesignal des ersten Pseudozufallsignals (M1);

Übertragungsmittel (221) zum Übertragen des Ausgangssignals der Modulationsmittel (206) als ein elektromagnetisches Wellensignal zum Ziel (225) hin;

Empfangsmittel zum Empfangen eines vom Ziel (225) reflektierten Signals;

einen zweiten Multiplizierer (207) zum Multiplizieren des Ausgangsignals der Empfangsmittel mit dem Ausgangsignal der zweiten Pseudozufallsignalerzeugungsmittel (204) und Ausgeben der phasenkorrelierten Trägerwelle als das Produkt der Multiplikation;

orthogonalen Signalerkennungsmitteln (208), (209) zum jeweiligen Multiplizieren der vom zweiten Multiplizierer (207) ausgegebenen phasenkorrelierten Trägerwelle mit einer gegenphasigen Komponente (I Signal) und mit einer Quadraturkomponente (Q Signal), welche von den Trägerwelle-Erzeugungsmitteln (219) extrahiert werden, wobei deren Phasen gegenseitig orthogonal sind, und Ausgeben der jeweiligen beiden Produkte, den Realteil und den Imaginärteil des orthogonal detektierten Signals;

einem Paar von Tiefpaßfiltern (211), (212) zum jeweiligen Glätten des von den orthogonalen Signaldetektionsmitteln ausgegebenen Realteils und des Imaginärteils;

einem Paar von Quadriermitteln (215), (216) zum jeweiligen Quadrieren der Ausgangssignale, welche von einem Paar der Tiefpaßfilter (211), (212) ausgegeben werden;

einem Addierer (217) zum Addieren der jeweils von einem Paar von Quadriermitteln augegebenen Ausgangssignale und Ausgeben des quadrierten Summenwerts der zwei geglätteten Komponenten des orthogonal detektierten Signals;

einem ersten Multiplizierer (205) zum Multiplizieren des ersten Pseudozufallsignals (M1) mit dem zweiten Pseudozufallsignal (M2);

einem ersten Tiefpaßfilter (210) zum Glätten des Ausgangsignals des ersten Multiplizierers (205) und Ausgeben eines ersten geglätteten Signals und

Zeitabschnittmeßmitteln (218) zum Messen eines Zeitabschnitts zwischen dem Zeitpunkt, wenn der Wert des Ausgangsignals des Tiefpaßfilters (210) ein Maximum erreicht und dem Zeitpunkt, wenn der quadrierte Summenwert der zwei geglätteten Komponenten des orthogonal detektierten Signals ein Maximum erreicht; und

Berechnungsmitteln zum Berechnen der Entfernung zum Ziel (225) hin aus dem durch die Zeitabschnittmeßmittel (218) gemessenen Zeitabschnitts durch Durchführen des gleichen Berechnungverfahrens wie im in Anspruch 3 beschriebenen Verfahren.

6. Eine Entfernungsmeßeinrichtung gemäß Anspruch 5, wobei die orthogonalen Signaldetektionsmittel aufweisen:

einem ersten Verteiler (213) zum Extrahieren eines Teils des Ausgangsignals der Trägerwelle-Erzeugungsmittel (219);

einem Hybriderichtungskoppler (220) zum Empfangen eines Ausgangsignals des ersten Verteilers (213), zum Umwandeln desselben , um das I Signal und das Q Signal zu erzeugen, wobei deren Phasen gegenseitig orthogonal sind, und zum Ausgeben dieser;

einem zweiten Verteiler (214) zum Teilen der vom zweiten Multiplizierer (207) ausgegebenen phasenkorrelierten Trägerwelle in ein $R_1$ Signal und ein $R_2$ Signal;

einem dritten Multiplizierer (208) zum Multiplizieren des vom Hybriderichtungskoppler (220) ausgegebenen I-Signals mit dem vom zweiten Verteiler (214) ausgegebenen $R_1$-Signal; und

einem vierten Multiplizierer (209) zum Multiplizieren des vom Hybriderichtungskoppler (220) ausgegebenen Q-Signals mit dem vom zweiten Verteiler (207) ausgegebenen $R_2$-Signal.

7. Eine Entfernungsmeßeinrichtung gemäß Anspruch 5, wobei die Entfernungsmeßeinrichtung auf einem oberen Teil von beiden, einem Konverter und Hochofen, angeordnet ist, um irgendeinen Schlackenpegel, Pegel von geschmolzenem Stahl und Pegel von angefülltem Rohstoff zu messen.

8. Eine Entfernungsmeßeinrichtung gemäß Anspruch 6, wobei die Entfernungsmeßeinrichtung auf einem oberen Teil von beiden, einem Konverter und Hochofen, angeordnet ist, um irgendeinen Schlackenpegel, Pegel von geschmolzenem Stahl und Pegel von angefülltem Rohstoff zu messen.

## Revendications

1. Procédé de mesure de distance comprenant les étapes de génération d'un premier signal pseudo-aléatoire (M1) ayant un signal de fréquence d'horloge $f_1$, transmission dudit premier signal pseudo-aléatoire vers une cible (116) sous forme d'un signal d'onde électromagnétique, réception d'un signal (M'1) réfléchi par ladite cible, exécution d'un processus de corrélation sur ledit signal reçu et mesure de la distance à ladite cible en fonction dudit signal de corrélation traité;

caractérisé en ce que le procédé comprend en outre les étapes de:

génération d'un second signal pseudo-aléatoire (M2) qui a le même motif que ledit premier signal pseudo-aléatoire (M1) mais ayant une fréquence d'horloge $f_2$ qui est légèrement différente de ladite fréquence $f_1$;

multiplication dudit premier signal pseudo-aléatoire (M1) par ledit second signal pseudo-aléatoire, afin de constituer un premier produit;

multiplication dudit signal reçu (M'1) réfléchi par ladite cible par ledit second signal pseudo-aléatoire (M2), afin de constituer un second produit;

obtention d'un premier signal lissé en faisant passer ledit premier produit par un premier filtre passe bas (111);

obtention d'un second signal lissé en faisant passer ledit second produit par un second filtre passe bas (112);

génération d'une première impulsion lorsque la valeur dudit premier signal lissé atteint un maximum;

génération d'une seconde impulsion lorsque la valeur dudit second signal lissé atteint un maximum;

mesure de l'intervalle de temps entre le moment où ladite première impulsion est générée et le moment où ladite seconde impulsion est générée,

calcul de la distance à la dite cible comme le résultat de la multiplication de la moitié dudit intervalle de temps par la vitesse de propagation de ladite onde électromagnétique afin de produire une première valeur d'opération sous forme du produit de ladite multiplication, division de la différence de fréquence entre lesdites fréquences d'horloge $f_1$ et $f_2$ par ladite fréquence d'horloge $f_1$ afin de produire une seconde valeur d'opération sous forme du quotient de ladite division et multiplication de ladite première valeur d'opération par ladite seconde valeur d'opération.

2.   Procédé de mesure de distance selon la revendication 1, comprenant en outre les étapes de:

génération d'une onde porteuse de référence;

modulation de ladite porteuse de référence en phase codée conformément audit premier signal pseudo-aléatoire (M1);

transmission de ladite porteuse modulée en phase vers la cible (225) sous forme d'une onde électromagnétique;

réception d'un signal réfléchi par ladite cible (225);

multiplication dudit signal reçu par ledit second signal pseudo-aléatoire (M2) et fourniture en sortie de l'onde porteuse corrélée en phase sous forme du produit de ladite multiplication;

multiplication respective de ladite onde porteuse multipliée et corrélée en phase fournie en sortie par une composante en phase (signal I) et par une composante en quadrature (signal Q) qui sont extraites de ladite onde porteuse de référence, leurs phases étant mutuellement orthogonales, et fourniture respective en sortie des deux produits, de la partie réelle et de la partie imaginaire dudit signal détecté orthogonal;

lissage respectif de ladite partie réelle et de ladite partie imaginaire dudit signal détecté orthogonal;

équarrissage respectif des composantes lissées respectives obtenues dans l'étape précédente et addition des valeurs équarries respectives, puis fourniture en sortie de la valeur de la somme équarrie des composantes lissées respectives du signal détecté orthogonal;

multiplication dudit premier signal pseudo-aléatoire (M1) par ledit second signal pseudo-aléatoire (M2) pour calculer un premier produit;

traitement dudit premier produit par un premier filtre passe bas (210) pour délivrer en sortie un premier signal lissé;

mesure de l'intervalle de temps entre le moment où la valeur dudit premier signal lissé atteint un maximum et le moment où ladite valeur de somme équarrie des composantes lissées respectives du signal détecté orthogonal atteint un maximum; et

calcul de la distance à la dite cible (225) en exécutant le même processus de calcul que le processus décrit dans la revendication 1, d'après ledit intervalle de temps.

3.   Appareil de mesure de distance comprenant un moyen (103) pour générer un premier signal pseudo-aléatoire (M1) ayant une fréquence d'horloge $f_1$, un moyen (107, 109) pour transmettre la sortie dudit moyen générateur du premier signal pseudo-aléatoire sous forme d'un signal d'onde électromagnétique vers une cible (116), un moyen de récepteur (108, 110) pour recevoir un signal réfléchi par ladite cible (116) afin d'obtenir un signal reçu, un moyen pour exécuter un traitement de corrélation et de détection sur le signal de sortie dudit moyen de récepteur, et un moyen pour mesurer la distance vers ladite cible (116) en fonction dudit signal traité;

caractérisé en ce que ledit appareil de mesure de distance comprend en outre:

un moyen (104) pour générer un second signal pseudo-aléatoire (M2) qui a le même motif que ledit premier signal pseudo-aléatoire (M1) mais ayant une fréquence d'horloge $f_2$ qui est légèrement différente de ladite fréquence d'horloge $f_1$;

un premier multiplieur (105) pour multiplier la sortie dudit moyen pour générer un premier signal pseudo-aléatoire par la sortie dudit moyen pour générer un second signal pseudo-aléatoire ;

un second multiplieur (106) pour multiplier la sortie dudit moyen de réception par la sortie dudit moyen pour générer un second signal pseudo-aléatoire;

un premier filtre passe bas (111) pour lisser la sortie dudit premier multiplieur et délivrer en sortie un premier signal lissé;

un second filtre passe bas (112) pour lisser la sortie dudit second multiplieur et délivrer en sortie un second signal lissé;

un premier moyen générateur d'impulsions pour générer une impulsion lorsque le premier signal lissé provenant dudit premier filtre passe bas (105) atteint un maximum;

un second moyen générateur d'impulsions pour générer une impulsion lorsque le second signal lissé obtenu par ledit second filtre passe bas (106) atteint un maximum;

un moyen de mesure (115) pour mesurer l'intervalle de temps entre le moment où la première impulsion est générée par ledit premier moyen générateur d'impulsions et le moment où ladite seconde impulsion est générée par ledit second moyen générateur d'impulsions; et

un moyen de calcul pour multiplier la moitié dudit intervalle de temps obtenu par ledit moyen de mesure, par la vitesse de propagation de ladite onde électromagnétique afin de produire une première valeur d'opération sous forme du produit de ladite multiplication, diviser la différence de fréquence entre lesdites fréquences d'horloge $f_1$ et $f_2$ par ladite fréquence d'horloge $f_1$ afin de produire une seconde valeur d'opération sous forme du quotient de ladite division et multiplier ladite première valeur d'opération par ladite seconde valeur d'opération afin de déterminer la distance vers ladite cible comme produit de ladite multiplication.

4. Appareil de mesure de distance selon la revendication 3, dans lequel:

ledit moyen générateur d'un premier signal pseudo-aléatoire comprend un premier générateur d'horloge (101) ayant une fréquence d'horloge $f_1$ et un premier moyen générateur de signal pseudo-aléatoire du type à synchronisation d'horloge (103) destiné à être commandé par la sortie dudit premier générateur d'horloge (101);

ledit moyen générateur d'un second signal pseudo-aléatoire comprend un second générateur d'horloge (102) ayant une fréquence d'horloge $f_2$ et un second moyen générateur de signal pseudo-aléatoire du type à synchronisation d'horloge (104) destiné à être commandé par la sortie dudit second générateur d'horloge (102);

ledit premier moyen à synchronisation d'horloge a la même construction que celle dudit second moyen générateur de signal pseudo-aléatoire du type à synchronisation d'horloge; et

la fréquence d'horloge $f_1$ dudit premier générateur d'horloge (101) est légèrement différente de la fréquence d'horloge $f_2$ dudit second générateur d'horloge (102).

5. Appareil de mesure de distance selon la revendication 3, comprenant en outre:

un moyen générateur d'onde porteuse (219) pour générer une onde porteuse de référence;

un moyen de modulateur (206) pour moduler la sortie dudit moyen générateur d'onde porteuse (219) en phase codée par chaque signal de code dudit premier signal pseudo-aléatoire (M1);

un moyen d'émetteur (221) pour transmettre la sortie dudit moyen modulateur (206) vers la cible (225) sous forme d'un signal d'onde électromagnétique:

un moyen de récepteur pour recevoir le signal réfléchi par ladite cible (225);

un second multiplieur (207) pour multiplier la sortie dudit moyen de récepteur par la sortie dudit second moyen générateur de signal pseudo-aléatoire (204) et fournir en sortie l'onde porteuse corrélée en phase comme produit de ladite multiplication;

un moyen détecteur de signal orthogonal (208), (209) pour multiplier respectivement ladite onde porteuse corrélée en phase fournie en sortie par ledit second multiplieur (207) par une composante en phase (signal I) et par une composante en quadrature (signal Q) qui sont extraites dudit moyen générateur d'onde porteuse (219), leurs phases étant mutuellement orthogonales, et fournir respectivement en sortie les deux produits, la partie réelle et la partie imaginaire du signal détecté orthogonal;

une paire de filtres passe bas (211), (212) pour lisser respectivement ladite partie réelle et ladite partie imaginaire provenant dudit moyen détecteur de signal orthogonal;

une paire de moyens d'équarrissage (215), (216) pour équarrir respectivement les signaux de sortie fournis en sortie par ladite paire de filtres passe bas (211), (212);

un additionneur (217) pour additionner les signaux de sortie fournis respectivement en sortie de ladite paire de moyens d'équarrissage et fournir en sortie la valeur de la somme équarrie desdites deux composantes lissées du signal détecté orthogonal;

un premier multiplieur (205) pour multiplier ledit premier signal pseudo-aléatoire (M1) par ledit second signal pseudo-aléatoire (M2);

un premier filtre passe bas (210) pour lisser le signal de sortie dudit premier multiplieur (205) et fournir en sortie un premier signal lissé; et

un moyen de mesure d'intervalle de temps (218) pour mesurer l'intervalle de temps entre le moment où la valeur du signal de sortie dudit premier filtre passe bas (210) atteint un maximum et le moment où ladite valeur de somme équarrie des deux composantes lissées du signal détecté orthogonal atteint un maximum; et

un moyen de calcul pour calculer la distance vers la dite cible (225) d'après ledit intervalle de temps mesuré par ledit moyen de mesure d'intervalle de temps (218) en exécutant le même processus de calcul que le processus décrit dans la Revendication 3.

6.  Appareil de mesure de distance selon la revendication 5, dans lequel ledit moyen de détection de signal orthogonal comprend:

    un premier distributeur (213) pour extraire une partie de la sortie dudit moyen générateur d'onde porteuse (219);

    un coupleur hybride (220) pour recevoir la sortie dudit premier distributeur (213), convertir celle-ci pour générer ledit signal I et ledit signal Q, dans lequel leurs phases sont mutuellement orthogonales et pour les délivrer en sortie;

    un second distributeur (214) pour diviser ladite onde porteuse corrélée en phase fournie en sortie par ledit second multiplieur (207), en un signal $R_1$ et en un signal $R_2$;

    un troisième multiplieur (208) pour multiplier le signal I fourni en sortie par ledit coupleur hybride (220) par le signal $R_1$ fourni en sortie par ledit second distributeur (214) ; et

    un quatrième multiplieur (209) pour multiplier le signal Q fourni en sortie par ledit coupleur hybride (220) par le signal $R_2$ fourni en sortie par ledit second distributeur (207).

7.  Appareil de mesure de distance selon la revendication 5, dans lequel ledit appareil de mesure de distance est aménagé sur la partie supérieure soit d'un convertisseur, soit d'un haut fourneau pour mesurer soit un niveau de scories, soit un niveau d'acier fondu, soit un niveau de matière première chargée.

8.  Appareil de mesure de distance selon la revendication 6, dans lequel ledit appareil de mesure de distance est aménagé sur la partie supérieure soit d'un convertisseur, soit d'un haut fourneau, pour mesurer soit un niveau de scories, soit un niveau d'acier fondu, soit un niveau de matière première chargée.

# FIG. 1

EP 0 362 992 B1

# FIG. 2

121

INPUT SIGNAL ———→ TAPPED DELAY LINE ————o

122 POLARITY CONVERTER

⊕ ⊕ ⊕ ⊕ ⊕ ⊖ ⊖ ⊕ ⊕ ⊖ ⊕ ⊖ ⊕

ADDER 123

OUTPUT SIGNAL

# FIG. 4

124 SHIFT REGISTER

| 1ST | 2ND | 3RD | 4TH | 5TH | 6TH | 7TH | ———·——→ OUTPUT

EXOR

125 EXCLUSIVE-OR CIRCUIT

# FIG. 5

+ + − +

1 | 1 | 0 | 1 ———— CODE

VOLTAGE

———— +E

t

−E

25

# FIG. 3

FIG. 6

(a) OUTPUT OF M-SEQUENCE SIGNAL GENERATOR 104 FOR ONE PERIOD

(b) M2: OUTPUT OF M-SEQUENCE SIGNAL GENERATOR 104

(c) M1: OUTPUT OF M-SEQUENCE SIGNAL GENERATOR 103

(d) M1': OUTPUT OF RECEIVING AMPLIFIER 108

(e) OUTPUT OF MULTIPLIER 105

(f) OUTPUT OF LOW-PASS FILTER 111

(g) OUTPUT OF MULTIPLIER 106

(h) OUTPUT OF LOW-PASS FILTER 112

(i) OUTPUT OF MAXIMUM VALUE DETECTOR 113

(j) OUTPUT OF MAXIMUM VALUE DETECTOR 114

(k) MEASURED TIME OF TIME-INTERVAL METER 115

$1270 n^{sec}$
127 SIGNALS

$10ns \times 127 \times 100 \times 2 = 254 \mu s$

START SIGNAL FOR TIME MEASUREMENT

STOP SIGNAL FOR TIME MEASUREMENT

$1.27 \mu s \times 200 = 254 \mu s$

EP 0 362 992 B1

# FIG. 7

# FIG. 8

M-SEQUENCE
SIGNAL M₁

M-SEQUENCE
SIGNAL M₂

106

RECEIVED
SIGNAL M₁'

105

111 — LOW-PASS
FILTER

LOW-PASS
FILTER —112

REFERENCE
SIGNAL

DETECTED
SIGNAL

130
IMAGE DISPLAY
APPARATUS

131 — IMAGE
CONVERTER

132 — DISPLAY
UNIT

# FIG. 9

⟶ ANTENNA MOVING DISTANCE

DETECTING DISTANCE

⟵ EARTH SURFACE

DETECTED PIPE

# FIG. 10

EP 0 362 992 B1

# FIG. 11

(a) INPUT SIGNAL TO LOW-PASS FILTER

WHILE TWO PSEUDO RANDOM SIGNALS ARE IN PHASE

WHILE TWO PSEUDO RANDOM SIGNALS ARE OUT OF PHASE

+E

-E

t

(b) OUTPUT SIGNAL OF LOW-PASS FILTER

t

(c) DETECTED SIGNAL

$T_D$

t

(d) REFERENCE SIGNAL

$t_a$   $t_b$

$T_B$

t

EP 0 362 992 B1

# FIG. 12

241
LEVEL MEASURING
APPARATUS PROPER

OUT PUT SIGNAL OF THE LEVEL
MEASURING APPARATUS

244
WAVE GUIDE

242
TRANSMITTING
ANTENNA

243
RECEIVING ANTENNA

245
SLAG

240
MELTING REDUCTION
FURNACE